# EUROPÄISCHE PATENTSCHRIFT

(11) **EP 4 005 009 B1**
(45) Veröffentlichungstag und Bekanntmachung des Hinweises auf die Patenterteilung: **25.06.2025**
(21) Anmeldenummer: 20746941.2
(22) Anmeldetag: 24.07.2020
(51) Int. Cl.: H01M 10/42, H01M 10/48, H01M 50/204, H01M 50/213, H01M 50/224, H01M 50/227, H01M 50/258, H01M 50/317, H01M 50/342, H01M 50/502, H01M 10/04, H01M 10/643

(54) **BATTERIEVORRICHTUNG**
BATTERY DEVICE
DISPOSITIF DE BATTERIE

(30) Priorität: 26.07.2019 DE 102019211190
(43) Veröffentlichungstag der Anmeldung: 01.06.2022
(73) Patentinhaber: ElringKlinger AG, 72581 Dettingen (DE)
(72) Erfinder: HERTER, Stefan, 88524 Uttenweiler (DE); SCHMIDT, Tobias, 72124 Pliezhausen (DE); DWENGER, Stefan, 72762 Reutlingen (DE); HANTSCHEL, Jochen, 72581 Dettingen/Erms (DE); GROTZ, Michael, 72800 Eningen (DE); BERTSCH, Moritz, 72581 Dettingen/Erms (DE); DIEZ, Armin, 73252 Lenningen (DE); LADERER, Mark, 72582 Grabenstetten (DE); WIECHERT, André, 72532 Gomadingen (DE); BUCK, Joachim, 89150 Laichingen (DE); HONECK, Christian, 72793 Pfullingen (DE); SCHWARZ, Florian, 72764 Reutlingen (DE); ROT, Heinrich, 70199 Stuttgart (DE); STRÄUSSL, Thomas, 86381 Krumbach (DE)
(74) Vertreter: DTS Patent- und Rechtsanwälte PartmbB
(86) Internationale Anmeldenummer: PCT/EP2020/071021
(87) Internationale Veröffentlichungsnummer: WO 2021/018789

(56) Entgegenhaltungen:
- DE-A1- 102015 221 269
- DE-A1- 102016 214 640
- US-A1- 2006 028 170

## Beschreibung

Die vorliegende Erfindung betrifft eine Batterievorrichtung.

Der vorliegenden Erfindung liegt die Aufgabe zugrunde, eine Batterievorrichtung bereitzustellen, welche einfach und kostengünstig herstellbar ist. Relevanter Stand der Technik ist zum Beispiel den Dokumenten US 2006/028170 A1, DE 10 2016 214640 A1 und DE 10 2015 221269 A1 zu entnehmen.

Diese Aufgabe wird durch die Merkmale des unabhängigen Vorrichtungsanspruchs gelöst.

Vorteilhafte Weiterbildungen sind Gegenstand der Unteransprüche.

Die erfindungsgemäße Batterievorrichtung umfasst vorzugsweise Folgendes: Ein oder mehrere Batteriemodule, wobei ein jeweiliges Batteriemodul Folgendes umfasst:
ein Rahmenelement;
ein Bodenelement; und
mehrere Batteriezellen.

Vorzugsweise sind die Batteriemodule entlang einer Stapelrichtung angeordnet oder anordenbar.

Beispielsweise ist es denkbar, dass ein Batteriemodul mindestens ungefähr 50 Batteriezellen umfasst.

Günstig kann es beispielsweise sein, wenn ein Batteriemodul ungefähr 200 bis ungefähr 600 Batteriezellen, beispielsweise ungefähr 400 Batteriezellen, umfasst.

Die Batterievorrichtung umfasst beispielsweise zwei oder mehr als zwei Batteriemodule.

Das Rahmenelement eines jeweiligen Batteriemoduls ist vorzugsweise ringförmig geschlossen ausgebildet.

Vorzugsweise definieren das Rahmenelement und das Bodenelement eines jeweiligen Batteriemoduls einen insbesondere topfförmigen Aufnahmeraum, in welchem Batteriezellen des Batteriemoduls aufgenommen sind.

Günstig kann es sein, wenn der Aufnahmeraum eines Batteriemoduls von dem Rahmenelement und von dem Bodenelement des Batteriemoduls sowie von dem Bodenelement eines benachbarten Batteriemoduls begrenzt wird.

Die Batterievorrichtung ist vorzugsweise derart anordenbar, dass die Stapelrichtung der Batteriemodule parallel zur Schwerkraftrichtung verläuft. Die Batterievorrichtung ist dabei insbesondere "stehend" angeordnet.

Alternativ dazu ist es denkbar, dass die Batterievorrichtung derart anordenbar ist, dass die Stapelrichtung der Batteriemodule im Wesentlichen senkrecht zur Schwerkraftrichtung verläuft. Die Batterievorrichtung ist dabei insbesondere "liegend" angeordnet.

Das Rahmenelement eines jeweiligen Batteriemoduls umgibt vorzugsweise sämtliche Batteriezellen des Batteriemoduls, insbesondere in einer senkrecht zur Stapelrichtung verlaufenden Richtung.

Die Batteriezellen sind vorzugsweise galvanische Zellen.

Insbesondere sind die Batteriezellen sogenannte Sekundärzellen.

Günstig kann es sein, wenn die Batteriezellen, insbesondere die Sekundärzellen, wiederaufladbar sind.

Vorzugsweise sind die Batteriemodule der Batterievorrichtung selbsttragend ausgebildet.

Bei der erfindungsgemäßen Ausgestaltung der Batterievorrichtung ist vorgesehen, dass die Rahmenelemente der jeweiligen Batteriemodule Gehäuseabschnitte der Batterievorrichtung bilden.

Vorzugsweise bilden die Rahmenelemente der Batteriemodule gemeinsam eine Außenhaut der Batterievorrichtung.

Vorzugsweise umfasst das Rahmenelement eines jeweiligen Batteriemoduls eine ringförmig geschlossene Wandung.

Beispielsweise ist es denkbar, dass das Rahmenelement einen Verbindungssteg umfasst, welcher zwischen zwei einander gegenüberliegenden Wandungsabschnitten der Wandung des Rahmenelements angeordnet ist und diese miteinander verbindet.

Insbesondere bildet eine Oberfläche der Wandung des jeweiligen Rahmenelements einen Teil einer Oberfläche eines Gehäuses der Batterievorrichtung. Günstig kann es sein, wenn ein jeweiliges Rahmenelement eine Doppelwandung umfasst, die ein Innenwandungselement und ein Außenwandungselement umfasst.

Vorzugsweise bildet eine Wandung, insbesondere ein Außenwandungselement einer Doppelwandung, eines jeweiligen Rahmenelements in einer senkrecht zur Stapelrichtung der Batteriemodule verlaufenden Richtung einen Teil einer Einhausung der Batterievorrichtung, insbesondere einen Teil eines Gesamtgehäuses der Batterievorrichtung.

Vorzugsweise werden die Rahmenelemente der Batteriemodule der Batterievorrichtung somit in einer radialen Richtung nicht von einer zusätzlichen Einhausung begrenzt.

Vorzugsweise können die Herstellungskosten der Batterievorrichtung durch den Entfall einer zusätzlichen Einhausung reduziert werden.

Unter einer radialen Richtung wird im Rahmen dieser Beschreibung und der beigefügten Ansprüche insbesondere eine quer, vorzugsweise senkrecht, zu der Stapelrichtung der Batteriemodule verlaufende Richtung verstanden.

Bei einer Ausgestaltung der Batterievorrichtung ist vorgesehen, dass Längsachsen der Batteriezellen eines jeweiligen Batteriemoduls im Wesentlichen parallel zu der Stapelrichtung der Batteriemodule angeordnet sind.

Wenn Längsachsen der Batteriezellen eines jeweiligen Batteriemoduls im Wesentlichen parallel zu der Stapelrichtung der Batteriemodule angeordnet sind, ist dabei vorzugsweise eine Außenkontur der Rahmenelemente der Batteriemodule an einen zur Verfügung stehenden Bauraum, beispielsweise in einem Fahrzeug, optimal anpassbar.

Insbesondere ist ein zur Verfügung stehender Bauraum, beispielsweise in einem Fahrzeug, optimal ausnutzbar.

Günstig kann es dabei sein, wenn ein Füllgrad eines Aufnahmeraums der Batteriemodule der Batterievorrichtung dadurch erhöht werden kann, dass die Längsachsen der Batteriezellen parallel zu der Stapelrichtung der Batteriemodule angeordnet sind.

Unter einem Füllgrad eines Aufnahmeraums der jeweiligen Batteriemodule wird im Rahmen dieser Beschreibung und der beigefügten Ansprüche insbesondere ein Verhältnis des von den Batteriezellen, welche in dem Aufnahmeraum angeordnet sind, verdrängten Verdrängungsvolumens zu einem Gesamtvolumen des Aufnahmeraums verstanden.

Vorzugsweise ist durch Erhöhen des Füllgrads eine Energiespeicherkapazität der Batteriemodule und insbesondere der Batterievorrichtung erhöhbar.

Bei einer Ausgestaltung der Batterievorrichtung ist vorgesehen, dass die Batteriezellen Rundzellen sind.

Vorzugsweise sind die Batteriezellen kreiszylindrische Batteriezellen, insbesondere kreiszylindrische Rundzellen.

Die Batteriezellen sind vorzugsweise zumindest näherungsweise rotationssymmetrisch zu einer Längsachse derselben ausgebildet.

Alternativ dazu ist es denkbar, dass die Batteriezellen prismatische Zellen sind.

Vorzugsweise ist durch Verwendung von Rundzellen ein Füllgrad eines Aufnahmeraums eines jeweiligen Batteriemoduls erhöhbar.

Vorzugsweise ist durch Verwendung von Rundzellen ein Aufnahmeraum eines Batteriemoduls optimal ausnutzbar. Insbesondere ist ein Aufnahmeraum eines Batteriemoduls durch Verwendung von Rundzellen zumindest näherungsweise vollständig ausfüllbar.

Bei einer Ausgestaltung der Batterievorrichtung ist vorgesehen, dass die Batterievorrichtung zwei Endkörper umfasst, wobei die Batteriemodule der Batterievorrichtung vorzugsweise zwischen den zwei Endkörpern angeordnet sind.

Beispielsweise ist es denkbar, dass die zwei Endkörper ein metallisches Material umfassen oder aus diesem gebildet sind, insbesondere Stahl oder Aluminium.

Bei einer Ausgestaltung der Batterievorrichtung ist vorgesehen, dass die zwei Endkörper Befestigungselemente umfassen, mittels welcher die Batterievorrichtung an einer tragenden Struktur, beispielsweise an einer tragenden Struktur eines Fahrzeugs, festlegbar ist.

Alternativ oder ergänzend dazu ist es denkbar, dass die Batteriemodule jeweils einzelne oder mehrere weitere Befestigungselemente umfassen, mittels welcher die Batterievorrichtung an einer tragenden Struktur festlegbar ist.

Beispielsweise umfassen nur die zwei Endkörper Befestigungselemente, mittels welcher die Batterievorrichtung an einer tragenden Struktur festlegbar ist.

Günstig kann es daher sein, wenn die Batterievorrichtung nur mittels der Endkörper an einer tragenden Struktur festlegbar ist.

Bei einer Ausgestaltung der Batterievorrichtung ist vorgesehen, dass die Batteriemodule der Batterievorrichtung miteinander verspannt oder verspannbar sind.

Insbesondere ist es denkbar, dass die Batteriemodule der Batterievorrichtung zwischen den zwei Endkörpern verspannt oder verspannbar sind.

Günstig kann es dabei insbesondere sein, wenn durch Verspannen der Batteriemodule im Wesentlichen keine Kraft auf die Batteriezellen der Batteriemodule ausgeübt wird, insbesondere parallel zu der Stapelrichtung und/oder parallel zu einer Längsachse der Batteriezellen eines jeweiligen Batteriemoduls.

Beispielsweise kann vorgesehen sein, dass die Batteriemodule der Batterievorrichtung zwischen den zwei Endkörpern mittels eines oder mehrerer Spannelemente verspannt oder verspannbar sind.

Insbesondere ist es denkbar, dass die Spannelemente sogenannte Zuganker sind.

Günstig kann es sein, wenn die Spannelemente ein metallisches Material umfassen oder aus diesem gebildet sind, beispielsweise aus Stahl oder Aluminium.

Vorzugsweise umfassen die Spannelemente Stahl oder sind aus diesem gebildet.

Als Spannelemente ausgebildete Zuganker umfassen insbesondere jeweils einen metallischen Stab, welcher ein Gewinde aufweist. Zum Verspannen der Batteriemodule ist der Stab vorzugsweise parallel zu der Stapelrichtung anordenbar. Mittels eines oder mehrerer auf den Stab aufschraubbarer Schraubelemente sind die Batteriemodule vorzugsweise miteinander verspannbar, insbesondere zwischen den zwei Endkörpern.

Beispielsweise ist es denkbar, dass die Batteriemodule in der Stapelrichtung mit einer Spannkraft verspannt werden, welche einer Spannung von höchstens ungefähr 30 %, beispielsweise von höchstens ungefähr 50 %, einer oberen Streckgrenze eines Materials der Spannelemente entspricht.

Bei einer Ausgestaltung der Batterievorrichtung ist vorgesehen, dass ein jeweiliges Batteriemodul ein Dichtelement umfasst.

Das Dichtelement eines Batteriemoduls ist vorzugsweise ein ringförmiges Dichtelement.

Günstig kann es sein, wenn das Dichtelement ein Kunststoffmaterial umfasst oder aus diesem gebildet ist.

Das Dichtelement eines jeweiligen Batteriemoduls ist beispielsweise in einer Aufnahmenut des Batteriemoduls aufgenommen oder aufnehmbar.

Beispielsweise ist es denkbar, dass die Aufnahmenut zur Aufnahme des Dichtelements an einer senkrecht zur Stapelrichtung angeordneten Stirnseite des Rahmenelements eines jeweiligen Batteriemoduls angeordnet und/oder in dieser ausgebildet ist.

Günstig kann es sein, wenn ein Dichtelement eines jeweiligen Batteriemoduls durch Verspannen der Batteriemodule der Batterievorrichtung zwischen zwei benachbarten Batteriemodulen, insbesondere zwischen einem Rahmenelement und einem Bodenelement zweier benachbarten Batteriemodule, komprimiert wird.

Mittels eines Dichtelements eines jeweiligen Batteriemoduls ist beispielsweise eine Dichtwirkung gemäß der Schutzklasse IP 6K9K erreichbar.

Bei einer Ausgestaltung der Batterievorrichtung ist vorgesehen, dass die Batteriezellen eines jeweiligen Batteriemoduls an dem Bodenelement des Batteriemoduls festgelegt sind.

Vorzugsweise stehen die Batteriezellen und das Bodenelement dabei nicht in unmittelbarem Materialkontakt.

Vorzugsweise weisen die Batteriezellen, insbesondere Zellböden der Batteriezellen, von dem Bodenelement einen Abstand auf, beispielsweise im Bereich von ungefähr 0,2 mm bis ungefähr 1,5 mm, vorzugsweise im Bereich von ungefähr 0,3 mm bis ungefähr 1 mm.

Vorzugsweise sind die Batteriezellen eines jeweiligen Batteriemoduls unmittelbar und/oder mittelbar mit dem Bodenelement des Batteriemoduls thermisch gekoppelt und/oder elektrisch von dem Bodenelement isoliert sind.

Günstig kann es sein, wenn die Batteriezellen eines jeweiligen Batteriemoduls mittels einer Wärmeleitpaste und/oder mittels einer Vergussmasse thermisch mit dem Bodenelement gekoppelt sind und/oder elektrisch von diesem isoliert sind.

Insbesondere kann vorgesehen sein, dass die Batteriezellen eines jeweiligen Batteriemoduls mittels Vergussmasse stoffschlüssig mit dem Bodenelement des Batteriemoduls verbunden sind.

Vorzugsweise sind die Batteriezellen eines jeweiligen Batteriemoduls mittels Vergussmasse in einem Abstand von dem Bodenelement angeordnet und mittels der Vergussmasse mit diesem verbunden, beispielsweise in einem Abstand im Bereich von ungefähr 0,2 mm bis ungefähr 1,5 mm, vorzugsweise im Bereich von ungefähr 0,3 mm bis ungefähr 1 mm.

Beispielsweise ist es denkbar, dass die Batteriezellen eines jeweiligen Batteriemoduls vollständig in die Vergussmasse eingebettet sind.

Alternativ dazu ist es beispielsweise denkbar, dass mindestens ungefähr 30 %, beispielsweise mindestens ungefähr 50 %, einer jeweiligen Batteriezelle bezogen auf eine parallel zu einer Längsachse der Batteriezelle gemessene Länge derselben in Vergussmasse eingebettet ist.

Die Vergussmasse umfasst beispielsweise Polyurethan, Silikon und/oder ein Epoxidharz.

Beispielsweise ist es denkbar, dass die Vergussmasse ein Einkomponentenmaterial, ein Zweikomponentenmaterial oder ein Mehrkomponentenmaterial ist.

Günstig kann es beispielsweise sein, wenn die Vergussmasse ein Zweikomponentenmaterial mit einem Härter, insbesondere einem Vernetzungsmittel, ist.

Günstig kann es insbesondere sein, wenn die Vergussmasse wärmehärtend und/oder feuchtigkeitshärtend ausgebildet ist.

Günstig kann es sein, wenn die Batteriezellen eines jeweiligen Batteriemoduls jeweils in eine erste Vergussmasse und in eine zweite Vergussmasse eingebettet sind.

Insbesondere ist es dabei denkbar, dass die Batteriezellen mittels einer ersten Vergussmasse stoffschlüssig mit dem Bodenelement eines jeweiligen Batteriemoduls verbunden sind. Vorzugsweise sind dabei höchstens ungefähr 50 %, beispielsweise höchstens ungefähr 40 %, insbesondere höchstens ungefähr 30 % einer jeweiligen Batteriezelle bezogen auf eine parallel zu einer Längsachse der Batteriezelle gemessene Länge derselben in der ersten Vergussmasse eingebettet.

Vorzugsweise sind die Batteriezellen ferner in eine zweite Vergussmasse eingebettet, mittels welcher ein Aufnahmeraum eines jeweiligen Batteriemoduls zumindest teilweise ausgefüllt ist. Beispielsweise ist der Aufnahmeraum eines jeweiligen Batteriemoduls mit der zweiten Vergussmasse ausgeschäumt.

Günstig kann es sein, wenn die erste Vergussmasse eine höhere Festigkeit als die zweite Vergussmasse aufweist.

Insbesondere ist es denkbar, dass die erste Vergussmasse eine höhere Dichte aufweist als die zweite Vergussmasse.

Ferner ist es insbesondere denkbar, dass die zweite Vergussmasse eine niedrigere Wärmeleitfähigkeit aufweist als die erste Vergussmasse.

Die zweite Vergussmasse ist beispielsweise ein Schaummaterial.

Wenn die Batteriezellen eines jeweiligen Batteriemoduls unmittelbar mit dem Bodenelement thermisch gekoppelt sind, weist das Batteriemodul in der Stapelrichtung beispielsweise folgende Reihenfolge auf: Bodenelement, elektrische Isolationsfolie, Wärmeleitpaste, Batteriezelle. Günstig kann es dabei insbesondere sein, wenn zwischen den einzelnen Lagen und/oder Elementen kein Abstand vorhanden ist.

Wenn die Batteriezellen eines jeweiligen Batteriemoduls mittelbar mit dem Bodenelement thermisch gekoppelt sind, sind die Batteriezellen des Batteriemoduls beispielsweise unmittelbar thermisch mit einer Vergussmasse gekoppelt. Vorzugsweise ist die Vergussmasse dabei wiederum unmittelbar thermisch mit dem Bodenelement des Batteriemoduls gekoppelt. Günstig kann es dabei sein, wenn die Batteriezellen in einem Abstand von dem Bodenelement angeordnet sind.

Günstig kann es sein, wenn die Batteriezellen in einer parallel zu der Stapelrichtung der Batterievorrichtung verlaufenden Richtung einen Abstand von dem Bodenelement im Bereich von ungefähr 0,2 mm bis ungefähr 1,5 mm, vorzugsweise im Bereich von ungefähr 0,3 mm bis ungefähr 1 mm, aufweisen.

Bei einer Ausgestaltung der Batterievorrichtung ist vorgesehen, dass das Rahmenelement eines jeweiligen Batteriemoduls eine Temperiervorrichtung umfasst oder bildet.

Günstig kann es sein, wenn die Temperiervorrichtung zur aktiven Temperierung und/oder zur passiven Temperierung ausgebildet ist.

Unter einer aktiven Temperierung wird im Rahmen dieser Beschreibung und der beigefügten Ansprüche insbesondere eine Temperierung verstanden, deren Wirkung im Wesentlichen auf Konvektion, insbesondere auf erzwungener Konvektion, beruht. Vorzugsweise wird eine aktive Temperierung durch ein durch äußere mechanische Einwirkung strömendes Temperierfluid, insbesondere durch eine durch äußere mechanische Einwirkung strömende Temperierflüssigkeit, realisiert.

Eine aktive Temperierung erfolgt beispielsweise durch Flüssigkeitskühlung.

Unter einer passiven Temperierung wird im Rahmen dieser Beschreibung und der beigefügten Ansprüche insbesondere eine Temperierung verstanden, deren Wirkung im Wesentlichen auf Wärmeleitung beruht.

Günstig kann es beispielsweise sein, wenn das Rahmenelement einen Temperierkanal umfasst, welcher mittels eines Temperiermediums durchströmbar ist.

Ein Temperierkanal des Rahmenelements ist insbesondere in einer Wandung, beispielsweise in einer Doppelwandung, des Rahmenelements angeordnet oder ausgebildet.

Alternativ oder ergänzend dazu ist es denkbar, dass die Temperiervorrichtung ein oder mehrere Wärmeleitelemente, insbesondere eine oder mehrere Kühlrippen, umfasst.

Ein oder mehrere Wärmeleitelemente der Temperiervorrichtung sind vorzugsweise an einer Außenoberfläche des Rahmenelements angeordnet.

Beispielsweise ist es denkbar, dass als Kühlrippen ausgebildete Wärmeleitelemente im Wesentlichen parallel zu der Stapelrichtung angeordnet sind.

Vorzugsweise ist durch parallel zu der Stapelrichtung verlaufende Kühlrippen eine Entformung des Rahmenelements erleichterbar.

Vorzugsweise ist mittels der Wärmeleitelemente, insbesondere mittels der Kühlrippen, eine Außenoberfläche des Rahmenelements vergrößerbar.

Wenn das Rahmenelement ein metallisches Material umfasst oder aus diesem gebildet ist, kann vorgesehen sein, dass die Temperiervorrichtung ein oder mehrere Wärmeleitelemente, insbesondere Kühlrippen, umfasst.

Günstig kann es ferner sein, wenn die Temperiervorrichtung zusätzlich zu einem oder mehreren Wärmeleitelementen ein Gebläse umfasst, mittels welchem die Wärmeleitelemente zum Abführen von Wärme von denselben anblasbar sind.

Alternativ oder ergänzend dazu ist es denkbar, dass die Wärmeleitelemente zum Abführen von Wärme von denselben durch Fahrtwind beim Bewegen eines Fahrzeugs anblasbar sind.

Bei einer Ausgestaltung der Batterievorrichtung ist vorgesehen, dass einzelne, mehrere oder sämtliche Batteriemodule der Batterievorrichtung jeweils ein Entgasungselement zum Entgasen eines Aufnahmeraums des jeweiligen Batteriemoduls umfassen.

Günstig kann es sein, wenn ein Entgasungselement eines Batteriemoduls an dem Rahmenelement des Batteriemoduls angeordnet ist.

Beispielsweise ist es denkbar, dass ein Entgasungselement ein Berstelement und/oder ein Druckausgleichselement umfasst oder durch dieses gebildet wird.

Wenn sämtliche Batteriemodule der Batterievorrichtung jeweils ein oder mehrere Entgasungselemente umfassen, kann vorzugsweise ein besonders kurzer Entgasungsweg realisiert werden, so dass heiße Gase möglichst direkt in eine Umgebung der Batterievorrichtung geleitet werden können.

Eine Propagation eines thermischen Durchgehens ("thermal runaway") von Batteriezellen eines Batteriemoduls auf weitere Batteriezellen desselben Batteriemoduls und/oder auf Batteriezellen benachbarter Batteriemodule ist dabei vorzugsweise verhinderbar.

Bei einer Ausgestaltung der Batterievorrichtung ist vorgesehen, dass sämtliche Batteriemodule der Batterievorrichtung oder mehr als 50 % der Batteriemodule der Batterievorrichtung identisch ausgebildet sind, vorzugsweise mehr als 80 % der Batteriemodule.

Beispielsweise ist es denkbar, dass bis auf ein Batteriemodul sämtliche Batteriemodule der Batterievorrichtung identisch ausgebildet sind.

Insbesondere sind sämtliche Rahmenelemente der Batteriemodule der Batterievorrichtung identisch ausgebildet.

Bei einer Ausgestaltung der Batterievorrichtung ist vorgesehen, dass ein jeweiliges Batteriemodul ein Propagationsschutzelement umfasst.

Durch Vorsehen eines Propagationsschutzelements ist vorzugsweise eine Propagation eines thermischen Durchgehens ("thermal runaway") von Batteriezellen eines Batteriemoduls auf Batteriezellen eines benachbarten Batteriemoduls verhinderbar.

Günstig kann es sein, wenn ein Propagationsschutzelement eines jeweiligen Batteriemoduls ein hitzebeständiges und/oder thermisch isolierendes Material, beispielsweise Steinwollevlies und/oder Glasfaservlies, umfasst oder aus diesem gebildet ist.

Beispielsweise ist es denkbar, dass ein Propagationsschutzelement eines Batteriemoduls mit dem Bodenelement des jeweiligen Batteriemoduls verbunden, beispielsweise verklebt, ist.

Günstig kann es beispielsweise sei, wenn ein Propagationsschutzelement eines Batteriemoduls auf einer dem Aufnahmeraum des Batteriemoduls abgewandten Seite des Bodenelements angeordnet ist.

Dabei ist es insbesondere denkbar, dass das Propagationsschutzelement eines Batteriemoduls den Aufnahmeraum eines benachbarten Batteriemoduls begrenzt.

Bei einer Ausgestaltung der Batterievorrichtung ist vorgesehen, dass die Batterievorrichtung ein oder mehrere Temperierelemente umfasst, welche jeweils zwischen zwei benachbarten Batteriemodulen angeordnet sind.

Günstig kann es beispielsweise sein, wenn das eine oder die mehreren Temperierelemente, welche jeweils zwischen zwei benachbarten Batteriemodulen angeordnet sind, elektrische Widerstandsheizelemente umfassen oder durch diese gebildet sind.

Vorzugsweise bildet ein Temperierelement, welches ein elektrisches Widerstandsheizelement umfasst oder durch dieses gebildet wird, ein Propagationsschutzelement. Günstig kann es dabei insbesondere sein, wenn ein Temperierelement, welches ein elektrisches Widerstandsheizelement umfasst oder durch dieses gebildet wird, ein hitzebeständiges Material umfasst.

Alternativ oder ergänzend dazu ist es denkbar, dass das eine oder die mehreren Temperierelemente, welche jeweils zwischen zwei benachbarten Batteriemodulen angeordnet sind, einen oder mehrere Temperierkanäle umfassen, durch welche ein Temperiermedium, beispielsweise eine Kühl- oder Heizflüssigkeit, leitbar ist.

Günstig kann es beispielsweise sein, wenn das eine oder die mehreren Temperierelemente, welche jeweils zwischen zwei benachbarten Batteriemodulen angeordnet sind, mittels eines Rollbond-Verfahrens hergestellt sind.

Es ist denkbar, dass sich von einem "Kern" eines Batteriemoduls hin zu dem Rahmenelement des Batteriemoduls ein Temperaturgefälle einstellt. Insbesondere ist es dabei denkbar, dass Batteriezellen in dem Kern des Batteriemoduls eine höhere Temperatur aufweisen als Batteriezellen in einem Randbereich des Batteriemoduls, welcher von dem Rahmenelement des Batteriemoduls begrenzt wird.

Ein maximal möglicher Ladestrom wird dabei durch ein Temperaturgefälle in dem Batteriemodul und/oder durch Temperaturunterschiede zwischen den Batteriezellen eines Batteriemoduls begrenzt. Batteriezellen des Batteriemoduls erwärmen sich beispielsweise zuerst im Kern des Batteriemoduls und erst anschließend in einem Randbereich des Batteriemoduls.

Beispielsweise ist es denkbar, dass Batteriezellen in verschiedenen ineinander angeordneten Abschnitten ausgehend von einem Kern des Batteriemoduls jeweils eine zumindest näherungsweise identische Temperatur aufweisen, welche sich von dem Kern des Batteriemoduls zu einem Randbereich des Batteriemoduls erhöht.

Günstig kann es daher sein, wenn das eine oder die mehreren Temperierelemente, welche jeweils zwischen zwei benachbarten Batteriemodulen angeordnet sind, jeweils zwei oder mehr als zwei Temperierzonen umfassen, in welchen voneinander verschiedene Temperaturen einstellbar sind.

Beispielsweise ist es denkbar, dass das eine oder die mehreren Temperierelemente, welche jeweils zwischen zwei benachbarten Batteriemodulen angeordnet sind, eine radial innere Temperierzone und eine die radial äußere Temperierzone umfassen, welche die radial innere Temperierzone umgibt, wobei das eine oder die mehreren Temperierelemente in der radial äußeren Temperierzone eine höhere flächenbezogene Heizleistung aufweisen als in der radial inneren Temperierzone.

Vorzugsweise weisen das eine oder die mehreren Temperierelemente dabei einen senkrecht zu einer Stapelrichtung der Batterievorrichtung genommenen Querschnitt auf, welche im Wesentlichen einem senkrecht zu der Stapelrichtung der Batterievorrichtung genommenen Querschnitt eines Aufnahmeraums der Batteriemodule der Batterievorrichtung entspricht.

Alternativ oder ergänzend dazu ist es denkbar, dass jeder einzelnen Batteriezelle eines Batteriemoduls jeweils ein einzelnes Temperierelement zugeordnet ist.

Günstig kann es ferner sein, wenn einer Gruppe von Batteriezellen eines Batteriemoduls, insbesondere einer Gruppe von in bestimmten Abschnitten angeordneten Batteriezellen, jeweils ein Temperierelement zugeordnet ist.

Temperierelemente sind beispielsweise Heizfolien und umfassen ein oder mehrere Widerstandsheizelemente.

Vorzugsweise kann durch Bereitstellen eines Temperierelements mit mehreren Temperierzonen oder durch Bereitstellen mehrerer Temperierelemente ein selektives Erwärmen einzelner Batteriezellen, insbesondere einzelner Gruppen von Batteriezellen, ermöglicht werden. Vorzugsweise sind dabei Temperaturen der Batteriezellen eines Batteriemoduls vergleichmäßigbar.

Vorzugsweise ist durch eine Vergleichmäßigung der Temperaturen der Batteriezellen eines Batteriemoduls ein höherer maximaler Ladestrom und somit insbesondere eine Verkürzung einer Ladezeit realisierbar.

Insbesondere ist ferner eine gleichmäßigere Entladung der Batteriezellen eines Batteriemoduls realisierbar.

Bei einer Ausgestaltung der Batterievorrichtung ist vorgesehen, dass das Rahmenelement und/oder das Bodenelement insbesondere einstückig aus einem metallischen Material, beispielsweise aus Aluminium, hergestellt sind.

Insbesondere ist es dabei denkbar, dass das Rahmenelement und/oder das Bodenelement aus einem metallischen Material mit einer hohen Wärmeleitfähigkeit hergestellt sind, beispielsweise aus einem metallischen Material mit einer Wärmeleitfähigkeit von mindestens ungefähr 130 W/m*K, vorzugsweise von mindestens ungefähr 160 W/m*K.

Günstig kann es beispielsweise sein, wenn das Rahmenelement und das Bodenelement ein einstückiges Aluminium-Druckgussteil sind.

Alternativ dazu ist es denkbar, dass jeweils ein Bodenelement stoffschlüssig mit einem Rahmenelement verbunden, insbesondere verschweißt, ist, beispielsweise mittels Reibrührschweißen.

Durch stoffschlüssiges Verbinden des Bodenelements und des Rahmenelements ist vorzugsweise eine thermische und/oder mechanische Kopplung des Bodenelements und des Rahmenelements realisierbar.

Insbesondere ist eine metallische Wärmeleitung von dem Bodenelement in das Rahmenelement realisierbar.

Wenn das Rahmenelement aus einem metallischen Material hergestellt ist, kann vorgesehen sein, dass das Rahmenelement ein oder mehrere Wärmeleitelemente, insbesondere eine oder mehrere Kühlrippen, umfasst, welche insbesondere an einer Außenoberfläche des Rahmenelements angeordnet sind.

Ein Verhältnis einer Außenoberfläche des Rahmenelements zu einer Innenoberfläche des Rahmenelements ist vorzugsweise mindestens ungefähr 1,3:1, vorzugsweise mindestens ungefähr 1,5:1.

Bei einer Ausgestaltung der Batterievorrichtung ist vorgesehen, dass das Rahmenelement aus einem Kunststoffmaterial hergestellt ist und/oder dass das Bodenelement aus einem metallischen Material hergestellt ist.

Wenn das Rahmenelement aus einen Kunststoffmaterial hergestellt ist, ist das Rahmenelement vorzugsweise spritzgegossen.

Günstig kann es insbesondere sein, wenn das Rahmenelement ein Kunststoffspritzgussbauteil ist.

Mittels eines metallischen Bodenelements ist vorzugsweise Wärme von den Batteriezellen eines Batteriemoduls weg leitbar.

Die Bodenelemente der Batteriemodule sind vorzugsweise Aluminiumplatten.

Günstig kann es sein, wenn die Bodenelemente der Batteriemodule eine Aluminiumlegierung mit einer Wärmeleitfähigkeit von mindestens ungefähr 130 W/m*K, vorzugsweise von mindestens ungefähr 160 W/m*K, umfassen oder aus diesem gebildet sind.

Vorzugsweise umfassen die Bodenelemente der Batteriemodule AlMgSi0,5 oder sind aus diesem gebildet.

Günstig kann es dabei insbesondere sein, wenn die Bodenelemente parallel zu einer Stapelrichtung der Batterievorrichtung eine mittlere Materialstärke im Bereich von ungefähr 2 mm bis ungefähr 6 mm aufweisen, beispielsweise von ungefähr 4 mm.

Vorzugsweise ist dabei eine Vibrationsfestigkeit der Batteriemodule der Batterievorrichtung erhöhbar. Insbesondere sind Temperaturen der Batteriezellen eines jeweiligen Batteriemoduls dabei vergleichmäßigbar.

Bei einer Ausgestaltung der Batterievorrichtung ist vorgesehen, dass ein jeweiliges Batteriemodul elektrische Kontaktierelemente umfasst, mittels welcher zwei benachbarte Batteriemodule miteinander durch Stapeln der Batteriemodule entlang der Stapelrichtung in Reihe verschaltbar sind.

Vorzugsweise umfasst ein jeweiliges Batteriemodul ein erstes Kontaktierelement und ein zweites Kontaktierelement, wobei das erste und das zweite Kontaktierelement in der Stapelrichtung auf einander abgewandten Seiten des Batteriemoduls angeordnet sind.

Günstig kann es dabei insbesondere sein, wenn das erste Kontaktierelement und das zweite Kontaktierelement eines jeweiligen Batteriemoduls derart angeordnet sind, dass das erste Kontaktierelement eines ersten Batteriemoduls zweier benachbarter Batteriemodule und das zweite Kontaktierelement eines zweiten Batteriemoduls der zwei benachbarten Batteriemodule miteinander in elektrisch leitendem Kontakt stehen.

Bei einer Ausgestaltung der Batterievorrichtung ist vorgesehen, dass ein jeweiliges Batteriemodul ein oder mehrere Abstandshalterelemente umfasst, mittels welcher die Bodenelemente der Batteriemodule im Wesentlichen parallel zueinander angeordnet oder anordenbar sind.

Die Abstandshalterelemente umfassen vorzugsweise ein metallisches Material oder sind aus diesem gebildet.

Günstig kann es beispielsweise sein, wenn ein Abstandshalterelement eines jeweiligen Batteriemoduls durch das Rahmenelement des Batteriemoduls gebildet wird, insbesondere wenn das Rahmenelement aus einem metallischen Material hergestellt ist.

Alternativ dazu ist es möglich, dass ein jeweiliges Batteriemodul mehrere, vorzugsweise mindestens drei, Abstandshalterelemente umfasst, welche in ein Rahmenelement des Batteriemoduls eingesetzt sind.

Bei einer Ausgestaltung der Batterievorrichtung ist vorgesehen, dass ein jeweiliges Batteriemodul eine Detektionseinrichtung zur Detektion der Zellspannungen der Batteriezellen des Batteriemoduls und/oder zur Detektion der Temperaturen der Batteriezellen des Batteriemoduls umfasst und/oder dass ein jeweiliges Batteriemodul einen Balancer zum Balancing der Batteriezellen des Batteriemoduls umfasst.

Günstig kann es sein, wenn das Rahmenelement eines jeweiligen Batteriemoduls ein Kunststoffmaterial umfasst oder aus diesem gebildet ist.

Vorzugsweise können durch Rahmenelemente, welche ein Kunststoffmaterial umfassen oder aus diesem gebildet sind, eine Gesamtmasse der Batterievorrichtung und/oder die Herstellungskosten der Batterievorrichtung reduziert werden.

Bei einer Ausgestaltung der Batterievorrichtung ist vorgesehen, dass das Rahmenelement ein Spritzgussbauteil, insbesondere ein Kunststoff-Spritzgussbauteil, ist.

Vorzugsweise ist das Rahmenelement ein einstückiges Kunststoff-Spritzgussbauteil.

Bei einer Ausgestaltung der Batterievorrichtung ist vorgesehen, dass das Rahmenelement eine Doppelwandung, insbesondere eine ringförmig geschlossene Doppelwandung, umfasst.

Die Doppelwandung umfasst vorzugsweise ein Innenwandungselement und Außenwandungselement.

Das Innenwandungselement und/oder das Außenwandungselement sind vorzugsweise ringförmig geschlossen ausgebildet.

Vorzugsweise ist durch Vorsehen des Außenwandungselements und/oder des Innenwandungselements auch bei Versagen des Außenwandungselements, beispielsweise im Crashfall, eine geschlossene Hülle für die Batteriezellen eines jeweiligen Batteriemoduls bereitstellbar.

Beispielsweise ist es denkbar, dass das Innenwandungselement und/oder das Außenwandungselement im Wesentlichen parallel zueinander angeordnet sind.

Einander gegenüberliegende Wandungsabschnitte des Innenwandungselements und des Außenwandungselements sind insbesondere mittels eines oder mehrerer Verbindungsstege miteinander verbunden.

Günstig kann es sein, wenn die Verbindungsstege parallel zu einer Stapelrichtung der Batterievorrichtung verlaufen.

Vorzugsweise sind das Innenwandungselement und das Außenwandungselement mittels mehrerer Verbindungsstege miteinander verbunden.

Die Verbindungsstege sind beispielsweise in regelmäßigen Abständen zueinander angeordnet.

Durch Bereitstellen einer mit einem Temperiermedium durchströmbaren Doppelwandung sind vorzugsweise folgende Vorteile erreichbar: Brandschutz durch Benetzung des Außenwandungselements und/oder des Innenwandungselements mit Temperiermedium, verbesserter Propagationsschutz, Erhöhung der elektromagnetischen Verträglichkeit (EMV); verbesserte mechanische Festigkeit; Temperierung der Batteriezellen eines Batteriemoduls.

Durch Benetzung des Außenwandungselements und/oder des Innenwandungselements mit Temperiermedium kann vorzugsweise ein Abbrennen oder Aufschmelzen des Rahmenelements erschwert, verzögert und/oder verhindert werden.

Beispielsweise kann eine elektromagnetische Verträglichkeit durch Durchströmen einer Doppelwandung eines Rahmenelements eines jeweiligen Batteriemoduls mit einem elektrisch leitfähigen Temperiermedium erhöht werden.

Zur Erhöhung der elektromagnetischen Verträglichkeit kann ferner vorgesehen sein, dass das Rahmenelement eines jeweiligen Batteriemoduls mit einem metallischen Material beschichtet, insbesondere bedampft, ist.

Insbesondere kann dabei eine Außenoberfläche und/oder eine Innenoberfläche des Rahmenelements mit einem metallischen Material beschichtet, insbesondere bedampft, sein.

Günstig kann es sein, wenn der Temperierraum eines Batteriemoduls in der Stapelrichtung von dem Bodenelement des Batteriemoduls und von einem Bodenelement eines benachbarten Batteriemoduls begrenzt wird.

Vorzugsweise umfasst das Bodenelement eines Batteriemoduls eine oder mehrere Durchtrittsöffnungen, welche in den Temperierraum eines Batteriemoduls münden.

Bei einer Ausgestaltung der Batterievorrichtung ist vorgesehen, dass die Doppelwandung des Rahmenelements mit einem Temperiermedium durchströmbar ist, insbesondere parallel zu einer Stapelrichtung der Batterievorrichtung.

Bei einer Ausgestaltung der Batterievorrichtung ist vorgesehen, dass die Doppelwandung des Rahmenelements einen Temperierraum des jeweiligen Batteriemoduls begrenzt, vorzugsweise zumindest zweiseitig.

Vorzugsweise ist der Temperierraum ringförmig geschlossen.

Der Temperierraum eines jeweiligen Batteriemoduls weist in einem senkrecht zu einer Stapelrichtung der Batterievorrichtung genommenen Querschnitt vorzugsweise eine Temperrierraumkontur auf.

Günstig kann es sein, wenn der Temperierraum teilweise von dem Bodenelement eines jeweiligen Batteriemoduls begrenzt wird.

Insbesondere kann vorgesehen sein, dass der Temperierraum zweiseitig von der Doppelwandung des Rahmenelements begrenzt wird. Vorzugsweise wird der Temperierraum dabei ferner auf einer in der Stapelrichtung ersten Seite des Rahmenelements von dem Bodenelement eines jeweiligen Batteriemoduls begrenzt. Günstig kann es ferner sein, wenn der Temperierraum auf einer in der Stapelrichtung zweiten Seite des Rahmenelements, welche der ersten Seite des Rahmenelements abgewandt ist, von einem Bodenelement eines benachbarten Batteriemoduls begrenzt wird.

Günstig kann es insbesondere sein, wenn der Temperierraum mit Ausnahme von Durchtrittsöffnungen von dem Bodenelement eines jeweiligen Batteriemoduls und von einem Bodenelement eines benachbarten Batteriemoduls begrenzt wird.

Bei einer Ausgestaltung der Batterievorrichtung ist vorgesehen, dass das Bodenelement eines jeweiligen Batteriemoduls eine oder mehrere Durchtrittsöffnungen umfasst, welche insbesondere in einen Temperierraum des Batteriemoduls münden.

Günstig kann es sein, wenn die Temperierräume von benachbarten Batteriemodulen fluidisch miteinander verbunden sind, insbesondere mittels der Durchtrittsöffnungen des Bodenelements.

Beispielsweise ist es denkbar, dass die Durchtrittsöffnungen kreisrund sind.

Um eine Ableitung von Wärme von einem Bodenelement eines Batteriemoduls in ein durch den Temperierraum strömendes Temperiermedium verbessern zu können, kann vorgesehen sein, dass die Durchtrittsöffnungen einen Öffnungsquerschnitt aufweisen, bei welchem ein Verhältnis der Oberfläche einer Wandung einer jeweiligen Durchtrittsöffnung zu dem Öffnungsquerschnitt derselben möglichst groß ist.

Beispielsweise ist es denkbar, dass die Durchtrittsöffnungen einen quadratischen oder einen sternförmigen Querschnitt aufweisen.

Vorzugsweise umfasst das Bodenelement eines jeweiligen Batteriemoduls mehrere Durchtrittsöffnungen, welche im Wesentlichen entlang einer Linie angeordnet sind.

Die Durchtrittsöffnungen sind entlang der Linie vorzugsweise in regelmäßigen Abständen zueinander angeordnet.

Günstig kann es insbesondere sein, wenn die Durchtrittsöffnungen des Bodenelements entlang einer Linie angeordnet sind, welche entlang einer Temperierraumkontur des Temperierraums eines jeweiligen Batteriemoduls verläuft.

Vorzugsweise ist radial innerhalb einer Linie, entlang welcher die Durchtrittsöffnungen angeordnet sind, und radial außerhalb der Linie, entlang welcher die Durchtrittsöffnungen angeordnet sind, jeweils ein Dichtabschnitt eines Dichtelements angeordnet.

Die Dichtabschnitte des Dichtelements sind vorzugsweise ringförmig geschlossen und verlaufen insbesondere im Wesentlichen parallel zu der Linie, entlang welcher die Durchtrittsöffnungen angeordnet sind.

Günstig kann es sein, wenn die Durchtrittsöffnungen, welche in den Temperierraum eines Batteriemoduls münden, Temperiermediumeinlässe und/oder Temperiermediumauslässe bilden, mittels welcher Temperiermedium in einen Temperierraum eines Batteriemoduls einleitbar und/oder aus diesem herausleitbar ist.

Bei einer Ausgestaltung der Batterievorrichtung ist vorgesehen, dass ein jeweiliges Batteriemodul zwei Dichtelemente umfasst, wobei zwischen dem Rahmenelement und dem Bodenelement des Batteriemoduls ein erstes Dichtelement angeordnet ist und/oder wobei zwischen dem Rahmenelement und einem Bodenelement eines benachbarten Batteriemoduls ein zweites Dichtelement angeordnet ist.

Günstig kann es sein, wenn die Dichtelemente an das Bodenelement und/oder an das Rahmenelement eines jeweiligen Batteriemoduls angespritzt sind.

Günstig kann es ferner sein, wenn ein Dichtelement beim Herstellen des Rahmenelements an das Rahmenelement angespritzt wird.

Alternativ oder ergänzend dazu ist es möglich, dass ein oder mehrere Dichtelemente beim Anspritzen eines Haltekörpers an das Bodenelement an dieses angespritzt werden.

Beispielsweise ist es denkbar, dass auf einander abgewandten Seiten des Bodenelements jeweils ein Dichtelement an das Bodenelement angespritzt ist.

Ferner ist es denkbar, dass ein Dichtelement unabhängig von dem Rahmenelement und/oder unabhängig von einem Haltekörper hergestellt wird. Vorzugsweise wird ein unabhängig von dem Rahmenelement und/oder unabhängig von dem Haltekörper hergestelltes Dichtelement in Dichtelementaufnahmenuten des Rahmenelements eingelegt.

Ein Dichtelement umfasst vorzugsweise einen ersten Dichtabschnitt und einen zweiten Dichtabschnitt.

Der erste Dichtabschnitt und/oder der zweite Dichtabschnitt sind vorzugsweise ringförmig geschlossen.

Der erste Dichtabschnitt und der zweite Dichtabschnitt des Dichtelements umfassen vorzugsweise jeweils eine Dichtlippe.

Günstig kann es sein, wenn der erste Dichtabschnitt und der zweite Dichtabschnitt miteinander verbunden sind, beispielsweise mittels eines oder mehrerer Stegelemente.

Vorzugsweise sind die Dichtelemente dabei einteilig ausgebildet.

Alternativ dazu ist es denkbar, dass die Dichtelemente mehrteilig ausgebildet sind und der erste Dichtabschnitt und der zweite Dichtabschnitt nicht miteinander verbunden sind.

Bei einer Ausgestaltung der Batterievorrichtung ist vorgesehen, dass ein jeweiliges Batteriemodul ein oder mehrere Abstandshalterelemente umfasst, mittels welcher die Bodenelemente der Batteriemodule im Wesentlichen parallel zueinander angeordnet oder anordenbar sind.

Günstig kann es sein, wenn das eine oder die mehreren Abstandshalterelemente eines Batteriemoduls druckstabil ausgebildet sind.

Das eine oder die mehreren Abstandshalterelemente eines Batteriemoduls weisen insbesondere eine höhere Druckstabilität auf als das Rahmenelement des Batteriemoduls.

Die Abstandshalterelemente umfassen vorzugsweise ein metallisches Material oder sind aus diesem gebildet.

Beispielsweise ist es denkbar, dass ein jeweiliges Batteriemodul mehrere, vorzugsweise mindestens drei, Abstandshalterelemente umfasst, welche in das Rahmenelement des Batteriemoduls eingesetzt sind.

Beispielsweise ist es ferner denkbar, dass das Rahmenelement eines jeweiligen Batteriemoduls eine oder mehrere Aufnahmen umfasst, wobei in jeder Aufnahme vorzugsweise ein Abstandshalterelement angeordnet ist.

Vorzugsweise sind die Abstandshalterelemente im Wesentlichen zylindrisch ausgebildet.

Günstig kann es sein, wenn die Abstandshalterelemente eines jeweiligen Batteriemoduls in einer senkrecht zu einer Stapelrichtung des Batteriemoduls verlaufenden Richtung außerhalb der Doppelwandung des Rahmenelements des Batteriemoduls angeordnet sind.

Vorzugsweise fluchten Abstandshalterelemente zweier benachbarter Batteriemodule in einer Stapelrichtung der Batterievorrichtung.

Bei einer Ausgestaltung der Batterievorrichtung ist vorgesehen, dass das eine oder die mehreren Abstandshalterelemente eines jeweiligen Batteriemoduls jeweils zwei an einander abgewandte Seiten des Abstandshalterelements angeordnete Anlageflächen umfassen, wobei ein jeweiliges Abstandshalterelement mit einer ersten Anlagefläche an dem Bodenelement des Batteriemoduls anliegt und wobei das Abstandshalterelement mit einer zweiten Anlagefläche an dem Bodenelement eines benachbarten Batteriemoduls anliegt oder an dieses anlegbar ist.

Vorzugsweise ist dabei eine Krafteinleitung von den Abstandshalterelementen in die Bodenelemente realisierbar.

Insbesondere ist eine Druckkraft von den Abstandshalterelementen auf an den Anlageflächen der Abstandshalterelemente anliegende Bodenelemente übertragbar.

Bei einer Ausgestaltung der Batterievorrichtung ist vorgesehen, dass die zwei Anlageflächen eines Abstandshalterelements eines jeweiligen Batteriemoduls einen Abstand voneinander aufweisen, welcher im Wesentlichen einer parallel zur Stapelrichtung genommenen Höhe einer Wandung, insbesondere einer Doppelwandung, des Batteriemoduls entspricht.

Vorzugsweise kann dabei verhindert werden, dass die Rahmenelemente der Batteriemodule, welche ein Kunststoffmaterial umfassen oder aus diesem gebildet sind, aufgrund einer parallel zu einer Stapelrichtung der Batterievorrichtung auf die Batteriemodule wirkenden Spannkraft komprimiert werden.

Bei einer Ausgestaltung der Batterievorrichtung ist vorgesehen, dass die Abstandshalterelemente eines jeweiligen Batteriemoduls Bolzenelemente oder Hülsenelemente sind.

Beispielsweise ist es denkbar, dass die Abstandshalterelemente eines jeweiligen Batteriemoduls in einem senkrecht zu einer Stapelrichtung des Batteriemoduls genommenen Querschnitt im Wesentlichen kreisförmig oder kreisringförmig ausgebildet sind.

Als Hülsenelemente ausgebildete Abstandshalterelemente sind vorzugsweise hohlzylindrisch ausgebildet.

Günstig kann es sein, wenn die Abstandshalterelemente rotationssymmetrisch zu einer Längsachse derselben ausgebildet sind.

Beispielsweise ist es denkbar, dass die Abstandshalterelemente einen Abstandshalterabschnitt umfassen, in welchem die Abstandshalterelemente insbesondere zylindrisch, beispielsweise kreiszylindrisch, ausgebildet sind.

Günstig kann es ferner sein, wenn die Abstandshalterelemente ferner einen Einführabschnitt umfassen, in welchem die Abstandshalterelemente insbesondere zylindrisch, beispielsweise kreiszylindrisch, ausgebildet sind.

Ein Einführabschnitt eines Abstandshalterelements ist vorzugsweise in einen Abstandshalterabschnitt eines in einer Stapelrichtung der Batterievorrichtung benachbarten Abstandshalterelements einführbar.

Bei einer Ausgestaltung der Batterievorrichtung ist vorgesehen, dass die Batteriemodule der Batterievorrichtung mittels der Abstandshalterelemente miteinander verspannt sind oder dass die Batteriemodule der Batterievorrichtung mittels durch die Abstandshalterelemente hindurchgeführter Spannelemente verspannt sind.

Beispielsweise ist es denkbar, dass die Abstandshalterelemente jeweils Schraubelemente umfassen, wobei in einer Stapelrichtung der Batterievorrichtung benachbarte Abstandshalterelemente mittels der Schraubelemente miteinander verschraubbar sind.

Beispielsweise ist es denkbar, dass ein Einführabschnitt eines Abstandshalterelements ein Außengewinde umfasst und/oder dass ein Abstandshalterabschnitt eines Abstandshalterelements ein Innengewinde umfasst.

Alternativ dazu ist es denkbar, dass Spannelemente der Batterievorrichtung durch als Hülsenelemente ausgebildete Abstandshalterelemente hindurchgeführt sind.

Günstig kann es sein, wenn die Batteriemodule der Batterievorrichtung zwischen zwei Endkörpern mittels eines oder mehrerer Spannelemente verspannt oder verspannbar sind.

Vorzugsweise werden die Batteriemodule der Batterievorrichtung vor dem Verspannen derselben miteinander verpresst, insbesondere in einer Stapelrichtung der Batterievorrichtung.

Günstig kann es dabei sein, wenn beim Verpressen der Batteriemodule Dichtelemente der Batteriemodule zwischen einem Rahmenelement und einem Bodenelement verformt, insbesondere komprimiert, werden.

Bei einer Ausgestaltung der Batterievorrichtung ist vorgesehen, dass das Rahmenelement eines jeweiligen Batteriemoduls einen oder mehrere parallel zu einer Stapelrichtung der Batterievorrichtung von dem Rahmenelement weg ragende Stapelvorsprünge und/oder eine oder mehrere Stapelausnehmungen umfasst, in welchen Stapelvorsprünge eines Rahmenelements eines benachbarten Batteriemoduls aufnehmbar sind.

Vorzugsweise ist mittels der Stapelvorsprünge und/oder mittels der Stapelausnehmungen ein Stapeln der Batteriemodule der Batterievorrichtung erleichterbar.

Vorzugsweise sind die Stapelvorsprünge und die Stapelausnehmungen des Rahmenelements eines jeweiligen Batteriemoduls auf einander abgewandten Seiten des Rahmenelements angeordnet.

Insbesondere kann vorgesehen sein, dass sämtliche Stapelvorsprünge des Rahmenelements eines jeweiligen Batteriemoduls auf einer ersten Seite des Rahmenelements angeordnet sind und dass sämtliche Stapelausnehmungen auf einer zweiten Seite des Rahmenelements angeordnet sind, welche der ersten Seite abgewandt ist.

Bei einer Ausgestaltung der Batterievorrichtung ist vorgesehen, dass das Rahmenelement eines jeweiligen Batteriemoduls mit dem Bodenelement des Batteriemoduls kraft- und/oder formschlüssig verbunden oder verbindbar ist, beispielsweise verklipst.

Das Rahmenelement eines jeweiligen Batteriemoduls umfasst vorzugsweise einen oder mehrere Rastvorsprünge.

Günstig kann es dabei sein, wenn das Bodenelement eines jeweiligen Batteriemoduls eine oder mehrere Rastausnehmungen umfasst, in welche die Rastvorsprünge des Rahmenelements einführbar sind.

Der eine oder die mehreren Rastvorsprünge eines Rahmenelements eines jeweiligen Batteriemoduls umfassen vorzugsweise jeweils zwei Rastelemente.

Insbesondere ist es denkbar, dass ein Rastelement eines Rastvorsprungs jeweils einen Rasthaken umfasst.

Die Rasthaken der zwei Rastelemente eines Rastvorsprungs hintergreifen vorzugsweise das Bodenelement eines jeweiligen Batteriemoduls, wenn das Rahmenelement mit dem Bodenelement kraft- und/oder formschlüssig verbunden, insbesondere verklipst, ist.

Bei einer Ausgestaltung der Batterievorrichtung ist vorgesehen, dass das Rahmenelement eines jeweiligen Batteriemoduls an einer Umfangsfläche des Rahmenelements eine Versteifungsstruktur umfasst, beispielsweise eine Versteifungsrippenstruktur.

Vorzugsweise ist mittels der Versteifungsstruktur eine Steifigkeit eines spritzgegossenen Rahmenelements vergrößerbar.

Insbesondere ist es denkbar, dass eine Versteifungsrippenstruktur des Rahmenelements mehrere Rippenelemente umfasst.

Bei einer Ausgestaltung der Batterievorrichtung ist vorgesehen, dass einzelne oder mehrere, insbesondere sämtliche, Batteriemodule der Batterievorrichtung identisch ausgebildet sind.

Günstig kann es insbesondere sein, wenn die Rahmenelemente und/oder die Bodenelemente sämtlicher Batteriemodule der Batterievorrichtung identisch ausgebildet sind.

Günstig kann es sein, wenn das Bodenelement eines jeweiligen Batteriemoduls ein metallisches Material umfasst oder aus diesem gebildet ist und einen Teil einer Außenoberfläche der Batterievorrichtung bildet.

Günstig kann es insbesondere sein, wenn das Bodenelement einen ringförmig geschlossenen Teil einer Außenoberfläche der Batterievorrichtung bildet.

Vorzugsweise ist mittels des Bodenelements eines jeweiligen Batteriemoduls Wärme zu der Außenoberfläche der Batterievorrichtung abführbar.

Vorzugsweise ist dabei eine passive Temperierung der Batterievorrichtung mittels der Bodenelemente realisierbar.

Unter einer passiven Temperierung wird im Rahmen dieser Beschreibung und der beigefügten Ansprüche insbesondere eine Temperierung verstanden, welche im Wesentlichen auf Wärmeleitung beruht.

Die Bodenelemente der Batteriemodule bilden insbesondere jeweils ringförmig geschlossene Oberflächenabschnitte einer Außenoberfläche der Batterievorrichtung.

Vorzugsweise sind die durch die Bodenelemente der Batteriemodule gebildeten ringförmig geschlossenen Oberflächenabschnitte in der Stapelrichtung durch die Rahmenelemente der Batteriemodule voneinander getrennt.

Vorzugsweise ist dadurch, dass das Bodenelement eines jeweiligen Batteriemoduls einen Teil einer Außenoberfläche der Batterievorrichtung bildet, eine Wärmeableitung zu einer Außenoberfläche der Batterievorrichtung mittels des Bodenelements realisierbar.

Senkrecht zu einer Stapelrichtung der Batterievorrichtung wird eine Außenoberfläche vorzugsweise von durch die Bodenelemente der Batteriemodule gebildeten, ringförmig geschlossenen Oberflächenabschnitten sowie von den Rahmenelementen der Batteriemodule gebildet.

Vorzugsweise weist das Bodenelement eine Wärmeleitfähigkeit von mindestens ungefähr 100 W/m*K auf, beispielsweise von mindestens ungefähr 150 W/m*K.

Günstig kann es beispielsweise sein, wenn das Bodenelement eine Wärmeleitfähigkeit von ungefähr 186 W/m*K aufweist.

Das Bodenelement umfasst insbesondere Aluminium oder ist aus diesem gebildet, beispielsweise AlMgSi0,5.

Vorzugsweise sind die Batteriemodule der Batterievorrichtung entlang einer Stapelrichtung angeordnet oder anordenbar.

Insbesondere ist es denkbar, dass das Bodenelement eines jeweiligen Batteriemoduls in einer senkrecht zu der Stapelrichtung verlaufenden Richtung einen Teil der Außenoberfläche des Batteriemoduls bildet.

Bei einer Ausgestaltung der Batterievorrichtung ist vorgesehen, dass die Bodenelemente der Batteriemodule senkrecht zu einer Stapelrichtung der Batterievorrichtung zumindest abschnittsweise, beispielsweise ringförmig geschlossen, über die Rahmenelemente der Batteriemodule weg ragen.

Bei einer Ausgestaltung der Batterievorrichtung ist vorgesehen, dass die Batterievorrichtung einen Kühlkörper und/oder ein Temperierelement umfasst, welche mit einzelnen oder mehreren, vorzugsweise mit sämtlichen, Bodenelementen der Batterievorrichtung thermisch gekoppelt sind.

Vorzugsweise sind der Kühlkörper und/oder das Temperierelement an der Außenoberfläche der Batterievorrichtung angeordnet.

Der Kühlkörper umfasst vorzugsweise eine oder mehrere Kühlrippen.

Günstig kann es sein, wenn der Kühlkörper in direktem Materialkontakt mit einen oder mehreren, vorzugsweise mit sämtlichen Bodenelementen der Batterievorrichtung steht, insbesondere jeweils an dem Teil der Außenoberfläche der Batterievorrichtung, welcher von den jeweiligen Bodenelementen der Batteriemodule gebildet wird.

Bei einer Ausgestaltung der Batterievorrichtung ist vorgesehen, dass ein jeweiliges Batteriemodul ferner einen Haltekörper zum Halten der Batteriezellen des jeweiligen Batteriemoduls umfasst, welcher mit dem Bodenelement des Batteriemoduls verbunden ist, insbesondere stoffschlüssig.

Bei einer Ausgestaltung der Batterievorrichtung ist vorgesehen, dass der Haltekörper eines jeweiligen Batteriemoduls mehrere Aufnahmeöffnungen umfasst, in welchen jeweils eine Batteriezelle des Batteriemoduls aufgenommen ist.

Beispielsweise ist es denkbar, dass der Haltekörper eines jeweiligen Batteriemoduls ungefähr 200 bis ungefähr 600 Aufnahmeöffnungen, beispielsweise ungefähr 400 Aufnahmeöffnungen, umfasst.

Bei einer Ausgestaltung der Batterievorrichtung ist vorgesehen, dass der Haltekörper eines jeweiligen Batteriemoduls eine Wabenstruktur umfasst oder durch eine Wabenstruktur gebildet wird.

Günstig kann es sein, wenn eine Wabenstruktur des Haltekörpers mehrere insbesondere polygonale Halteelemente umfasst, welche die Aufnahmeöffnungen begrenzen.

Die Halteelemente sind beispielsweise regelmäßige Sechsecke.

Beispielsweise ist es denkbar, dass die Halteelemente jeweils benachbart zu mehreren weiteren Halteelementen angeordnet sind.

Insbesondere ist es denkbar, dass Halteelemente der Wabenstruktur jeweils benachbart zu sechs weiteren Halteelementen angeordnet sind.

Vorzugsweise wird eine Aufnahmeöffnung eines Halteelements von mehreren Halteelementstegen begrenzt, beispielsweise von jeweils sechs Halteelementstegen.

Günstig kann es sein, wenn jeweils mehrere Halteelementstege benachbarter Halteelemente an einem Knoten miteinander verbunden sind.

Günstig kann es beispielsweise sein, wenn an dem Knoten drei Halteelemente dreier benachbarter Halteelemente miteinander verbunden sind.

Bei einer Ausgestaltung der Batterievorrichtung ist vorgesehen, dass der Haltekörper eines jeweiligen Batteriemoduls an das Bodenelement des Batteriemoduls angespritzt ist.

Vorzugsweise umfasst der Haltekörper an mehreren Knoten angeordnete Verbindungsbereiche, an welchen der Haltekörper mit dem Bodenelement verbunden ist, beispielsweise stoffschlüssig.

Günstig kann es beispielsweise sein, wenn der Haltekörper an den Verbindungsbereichen an das Bodenelement angespritzt ist.

Günstig kann es beispielsweise sein, wenn an ungefähr 50 % der Knoten des Haltekörpers ein Verbindungsbereich angeordnet ist.

Bei einer Ausgestaltung der Batterievorrichtung ist vorgesehen, dass der Haltekörper einstückig ausgebildet ist.

Der Haltekörper ist vorzugsweise ein Spritzgussbauteil, insbesondere ein einstückiges Spritzgussbauteil.

Vorzugsweise umfasst der Haltekörper ein Kunststoffmaterial oder ist aus diesem gebildet.

Bei einer Ausgestaltung der Batterievorrichtung ist vorgesehen, dass ein jeweiliges Batteriemodul ferner ein Dichtelement, insbesondere zwei Dichtelemente, umfasst, welche mit dem Bodenelement des Batteriemoduls verbunden sind, insbesondere stoffschlüssig.

Günstig kann es sein, wenn das Dichtelement, insbesondere die zwei Dichtelemente, an das Bodenelement angespritzt sind.

Günstig kann es sein, wenn das Dichtelement, insbesondere die zwei Dichtelemente, jeweils ringförmig geschlossen ausgebildet sind.

Eine Dichtkontur des Dichtelements korrespondiert vorzugsweise mit einer Kontur des Rahmenelements eines jeweiligen Batteriemoduls, insbesondere in einem senkrecht zu einer Stapelrichtung des Batteriemoduls genommenen Querschnitt.

Bei einer Ausgestaltung der Batterievorrichtung ist vorgesehen, dass die zwei Dichtelemente an zwei einander gegenüberliegenden Seiten des Bodenelements eines jeweiligen Batteriemoduls angeordnet, insbesondere an das Bodenelement angespritzt, sind.

Bei einer Ausgestaltung der Batterievorrichtung ist vorgesehen, dass das Dichtelement einen ersten Dichtabschnitt und einen zweiten Dichtabschnitt umfasst.

Ein erster Dichtabschnitt und zweiter Dichtabschnitt sind vorzugsweise jeweils ringförmig geschlossen ausgebildet.

Günstig kann es sein, wenn der erste Dichtabschnitt und der zweite Dichtabschnitt des Dichtelements im Wesentlichen parallel zueinander angeordnet sind.

Bei einer Ausgestaltung der Batterievorrichtung ist vorgesehen, dass die Batteriezellen eines jeweiligen Batteriemoduls thermisch mit dem Bodenelement des Batteriemoduls gekoppelt sind.

Günstig kann es beispielsweise sein, wenn die Batteriezellen eines jeweiligen Batteriemoduls mittels einer Wärmeleitpaste und/oder mittels einer Vergussmasse thermisch mit dem Bodenelement des Batteriemoduls gekoppelt sind.

Bei einer Ausgestaltung der Batterievorrichtung ist vorgesehen, dass das Bodenelement eines jeweiligen Batteriemoduls einen oder mehrere Temperierkanäle, beispielsweise eine Temperierkanalstruktur, umfasst.

Ein Temperierkanal, insbesondere eine Temperierkanalstruktur, des Bodenelements ist vorzugsweise mittels eines Temperiermediums durchströmbar.

Beispielsweise ist es denkbar, dass das Bodenelement eines jeweiligen Batteriemoduls mehrlagig ausgebildet ist und einen Temperierkanal, insbesondere eine Temperierkanalstruktur, begrenzt.

Ein Temperierkanal, insbesondere eine Temperierkanalstruktur, des Bodenelements eines jeweiligen Batteriemoduls ist beispielsweise mittels Rollbonden hergestellt.

Günstig kann es sein, wenn durch Vorsehen eines Temperierkanals in dem Bodenelement eines jeweiligen Batteriemoduls eine aktive Temperierung der Batterievorrichtung mittels des Bodenelements realisierbar ist.

Bei einer Ausgestaltung der Batterievorrichtung ist vorgesehen, dass das Bodenelement eines jeweiligen Batteriemoduls ein Hybridbauteil, insbesondere ein Metall-Elastomer-Hybridbauteil, ist.

Der vorliegenden Erfindung liegt die weitere Aufgabe zugrunde, ein Verfahren zum Fixieren von Batteriezellen bereitzustellen, mittels welchem eine Batterievorrichtung einfach und kostengünstig herstellbar ist.

Diese Aufgabe wird durch ein Verfahren zum Fixieren von Batteriezellen gemäß dem unabhängigen Verfahrensanspruch gelöst.

Das erfindungsgemäße Verfahren zum Fixieren von Batteriezellen weist vorzugsweise einzelne oder mehrere der im Zusammenhang mit der erfindungsgemäßen Batterievorrichtung beschriebenen Merkmale und/oder Vorteile auf.

Das Verfahren zum Fixieren von Batteriezellen umfasst vorzugsweise Folgendes:
- Bereitstellen eines Lagenelements;
- Bereitstellen mehrerer Batteriezellen;
- Fixieren der Batteriezellen in dem Lagenelement durch insbesondere plastisches Verformen des Lagenelements.

Günstig kann es sein, wenn das insbesondere plastisch verformte Lagenelement einen Haltekörper eines Batteriemoduls bildet.

Vorzugsweise ist das Lagenelement ein warmumformbares Lagenelement.

Die Batteriezellen sind insbesondere Rundzellen.

Das Lagenelement umfasst vorzugsweise ein Kunststoffmaterial oder ist aus diesem gebildet.

Günstig kann es beispielsweise sein, wenn das Lagenelement ein Polyolefin umfasst oder aus diesem gebildet ist, beispielsweise Polyethylen (PE) oder Polypropylen (PP).

Vorzugsweise umfasst das Lagenelement ein Low-Density Polyethylen (LDPE).

Das Lagenelement ist insbesondere eine Schrumpffolie.

Günstig kann es sein, wenn das Lagenelement ein elektrisch isolierendes Material umfasst oder aus diesem gebildet ist.

Ferner ist es beispielsweise denkbar, dass das Lagenelement Polymethylmethacrylat (PMMA) oder Polycarbonat (PC) umfasst oder daraus gebildet ist.

Bei einer Ausgestaltung des Verfahrens ist vorgesehen, dass die Batteriezellen in dem Lagenelement durch Erwärmen des Lagenelements und/oder durch anschließendes Abkühlen des Lagenelements fixiert werden.

Günstig kann es sein, wenn das Lagenelement nach dem Fixieren der Batteriezellen in dem Lagenelement an einer Mantelfläche und/oder an einer Grundfläche einer jeweiligen Batteriezelle anliegt.

Insbesondere kann vorgesehen sein, dass das Lagenelement zu höchstens ungefähr 50 % an einer Mantelfläche einer jeweiligen Batteriezelle anliegt.

Vorzugsweise liegt das Lagenelement zu mindestens ungefähr 10 %, beispielsweise zu mindestens ungefähr 20 %, vorzugsweise zu mindestens ungefähr 30 %, an einer Mantelfläche einer jeweiligen Batteriezelle an.

Günstig kann es ferner sein, wenn das Lagenelement vollständig an einer gesamten Grundfläche einer jeweiligen Batteriezelle anliegt.

Das Lagenelement liegt nach dem Fixieren der Batteriezellen vorzugsweise topfförmig an den Batteriezellen an.

Bei einer Ausgestaltung des Verfahrens ist vorgesehen, dass das Lagenelement durch Erwärmen plastisch verformt wird oder dass das Lagenelement erwärmt wird und das erwärmte Lagenelement anschließend plastisch verformt wird.

Beispielsweise ist es denkbar, dass das insbesondere warmumformbare Lagenelement erst nach dem Erwärmen desselben umformbar ist.

Bei einer Ausgestaltung des Verfahrens ist vorgesehen, dass das Lagenelement nach dem Erwärmen abgekühlt wird.

Vorzugsweise verfestigt sich das Lagenelement nach dem Abkühlen desselben.

Das abgekühlte Lagenelement ist vorzugsweise im Wesentlichen starr.

Bei einer Ausgestaltung des Verfahrens ist vorgesehen, dass das Lagenelement auf die Batteriezellen aufgeschrumpft wird.

Vorzugsweise wird das Lagenelement nur auf einen Teilbereich der Batteriezellen aufgeschrumpft.

Insbesondere werden die Batteriezellen nicht vollständig von dem Lagenelement umgeben.

Günstig kann es beispielsweise sein, wenn das Lagenelement nur auf einer in Richtung der Längsachsen der Batteriezellen ersten Seite der Batteriezellen auf diese aufgeschrumpft wird.

Beispielsweise kann vorgesehen sein, dass das Lagenelement jeweils auf höchstens ungefähr 50 % einer Länge einer jeweiligen Batteriezelle auf die Batteriezellen aufgeschrumpft wird.

Unter einer Länge der Batteriezellen wird im Rahmen dieser Beschreibung und der beigefügten Ansprüche insbesondere eine Länge der Batteriezellen in einer parallel zu einer Längsachse der Batteriezellen verlaufenden Richtung verstanden.

Vorzugsweise wird das Lagenelement jeweils auf mindestens ungefähr 10 %, insbesondere auf mindestens ungefähr 20 %, beispielsweise auf mindestens ungefähr 30 %, einer Länge einer jeweiligen Batteriezelle auf die Batteriezellen aufgeschrumpft.

Bei einer Ausgestaltung des Verfahrens ist vorgesehen, dass die Batteriezellen vor dem Fixieren derselben in dem Lagenelement relativ zueinander ausgerichtet werden, insbesondere mittels eines Werkzeugs.

Vorzugsweise werden die Batteriezellen vor dem Fixieren derselben in dem Lagenelement parallel zueinander angeordnet.

Insbesondere werden die Batteriezellen dabei derart angeordnet, dass Längsachsen der Batteriezellen parallel zueinander angeordnet sind.

Günstig kann es ferner sein, wenn die Batteriezellen vor dem Fixieren derselben in dem Lagenelement in einem vorgegebenen Muster angeordnet werden.

Insbesondere ist es dabei denkbar, dass die Batteriezellen in dem vorgegebenen Muster in mehreren Zeilen und mehreren Spalten angeordnet werden.

Günstig kann es beispielsweise sein, wenn die Batteriezellen in einer Zeilenrichtung des vorgegebenen Musters jeweils einen identischen ersten Abstand voneinander aufweisen.

Ferner ist es vorzugsweise denkbar, dass die Batteriezellen in einer Spaltenrichtung des vorgegebenen Musters jeweils einen identischen zweiten Abstand voneinander aufweisen.

Es ist dankbar, dass der erste Abstand in der Zeilenrichtung kleiner oder größer ist als der zweite Abstand in der Spaltenrichtung.

Bei einer Ausgestaltung des Verfahrens ist vorgesehen, dass die Batteriezellen zunächst parallel zueinander und/oder in einem vorgegebenen Muster ausgerichtet werden.

Die Batteriezellen werden vorzugsweise mittels eines Werkzeugs parallel zueinander und/oder in dem vorgegebenen Muster angeordnet.

Das Werkzeug umfasst insbesondere eine erste Werkzeughälfte mit einer Negativform, in welcher die Batteriezellen zumindest teilweise aufnehmbar sind.

Die erste Werkzeughälfte ist insbesondere ein Matrizenelement.

Die erste Werkzeughälfte bildet insbesondere ein Formgebungselement.

Die erste Werkzeughälfte weist insbesondere eine Negativform des vorgegebenen Musters auf.

Günstig kann es beispielsweise sein, wenn die erste Werkzeughälfte mehrere Positionieröffnungen umfasst, in welchen jeweils eine Batteriezelle zur Ausrichtung der Batteriezellen aufnehmbar ist.

Vorzugsweise umfasst die erste Werkzeughälfte mehrere Zeilen und mehrere Reihen von Positionieröffnungen, wobei eine Zeile und/oder eine Reihe jeweils mehrere Positionieröffnungen umfasst.

Beispielsweise ist es denkbar, dass die Batteriezellen mittels einer Positioniervorrichtung in den Positionieröffnungen der ersten Werkzeughälfte angeordnet werden, beispielsweise mittels eines Industrieroboters.

Vorzugsweise wird das Lagenelement verformt, indem das Lagenelement zwischen den Batteriezellen und der ersten Werkzeughälfte positioniert wird und anschließend die Batteriezellen in den Positionieröffnungen der ersten Werkzeughälfte angeordnet werden.

Vorzugsweise wird das Lagenelement dabei mittels der Batteriezellen in den Positionieröffnungen der ersten Werkzeughälfte verklemmt und dabei verformt.

Insbesondere wird das Lagenelement jeweils zwischen einer Positionieröffnungswandung und einer Batteriezelle geklemmt.

Das Werkzeug umfasst vorzugsweise eine zweite Werkzeughälfte mit einer Negativform, in welcher die Batteriezellen zumindest teilweise aufnehmbar sind.

Die erste und die zweite Werkzeughälfte sind vorzugsweise relativ zueinander bewegbar.

Vorzugsweise weist die zweite Werkzeughälfte eine Negativform des vorgegebenen Musters auf.

Die zweite Werkzeughälfte umfasst vorzugsweise ebenfalls mehrere Positionieröffnungen, in welchen jeweils eine Batteriezelle zur Ausrichtung der Batteriezellen aufnehmbar ist.

Günstig kann es sein, wenn die Positionieröffnungen der ersten Werkzeughälfte und/oder der zweiten Werkzeughälfte jeweils im Wesentlichen zylindrisch, insbesondere im Wesentlichen kreiszylindrisch, ausgebildet sind.

Vorzugsweise ist ein Innendurchmesser der Positionieröffnungen der ersten Werkzeughälfte größer als ein Außendurchmesser der Batteriezellen.

Günstig kann es beispielsweise sein, wenn ein Innendurchmesser der Positionieröffnungen der ersten Werkzeughälfte im Wesentlichen gleich groß oder kleiner ist als die Summe aus einem Außendurchmesser der Batteriezellen und einer doppelten Materialstärke des Lagenelements.

Vorzugsweise sind das Lagenelement und eine jeweilige Batteriezelle dabei innerhalb der Positionieröffnungen der ersten Werkzeughälfte verklemmbar.

Günstig kann es ferner sein, wenn ein Innendurchmesser der Positionieröffnungen der zweiten Werkzeughälfte im Wesentlichen einem Außendurchmesser der Batteriezellen entspricht.

Bei einer Ausgestaltung des Verfahrens ist vorgesehen, dass einzelne oder mehrere Batteriezellen nach dem parallelen Ausrichten und/oder nach dem Ausrichten in einem vorgegebenen Muster parallel zu einer Längsachse der Batteriezellen bewegt werden.

Vorzugsweise werden die Batteriezellen dabei gegen einen Anschlag bewegt, welcher vorzugsweise senkrecht zu einer Längsachse der Batteriezellen angeordnet ist.

Günstig kann es dabei insbesondere sein, dass die Batteriezellen derart gegen einen Anschlag bewegt werden, dass die Grundflächen sämtlicher Batteriezellen nach dem Bewegen in einer einzigen Ebene angeordnet sind.

Bei einer Ausgestaltung des Verfahrens ist vorgesehen, dass einzelne oder mehrere Batteriezellen so weit parallel zu einer Längsachse der Batteriezellen bewegt werden, dass Grundflächen sämtlicher Batteriezellen im Wesentlichen in einer einzigen Ebene angeordnet sind.

Beispielsweise ist es denkbar, dass sämtliche Batteriezellen gegen einen Anschlag bewegt werden.

Dabei kann insbesondere vorgesehen sein, dass die erste Werkzeughälfte und die zweite Werkzeughälfte aufeinander zu bewegt werden.

Vorzugsweise umfassen die Positionieröffnungen der ersten Werkzeughälfte und/oder die Positionieröffnungen der zweiten Werkzeughälfte dabei einen Anschlag.

Alternativ dazu ist es denkbar, dass die erste oder zweite Werkzeughälfte einen Anschlag umfasst und dass die zweite oder die erste Werkzeughälfte eine Bewegungseinrichtung zum Bewegen einzelner oder mehrerer Batteriezellen umfasst, mittels welcher die Batteriezellen gegen den Anschlag bewegbar sind.

Günstig kann es beispielsweise sein, wenn die Bewegungseinrichtung einen oder mehrere Kolben umfasst, welche in Positionieröffnungen der ersten oder der zweiten Werkzeughälfte verlagerbar sind.

Alternativ dazu ist es denkbar, dass die Bewegungseinrichtung ein oder mehrere Düsenelemente umfasst, welche in die Positionieröffnungen der ersten oder der zweiten Werkzeughälfte münden.

Vorzugsweise werden das Lagenelement und/oder die in einer jeweiligen Positionieröffnung der ersten Werkzeughälfte angeordnete Batteriezelle dabei durch Unterdrucksetzen eines von dem Lagenelement und der Positionieröffnung begrenzten Druckraums bewegt.

Die vorliegende Erfindung betrifft ferner eine Batterievorrichtung, welche ein oder mehrere Batteriemodule umfasst,
wobei ein jeweiliges Batteriemodul Folgendes umfasst:
ein Rahmenelement;
ein Bodenelement; und
mehrere Batteriezellen,
wobei die Batteriezellen durch das erfindungsgemäße Verfahren zum Fixieren von Batteriezellen in einem Lagenelement fixiert sind und
wobei das Lagenelement und die in dem Lagenelement fixierten Batteriezellen an dem Bodenelement des Batteriemoduls festgelegt sind.

Günstig kann es insbesondere sein, wenn das Lagenelement, in welchem die Batteriezellen fixiert sind, mit dem Bodenelement eines Batteriemoduls stoffschlüssig verbunden ist, insbesondere mittels einer Wärmeleitpaste.

Nach dem Verformen des Lagenelements, insbesondere nach dem Abkühlen des verformten Lagenelements, bildet das verformte Lagenelement vorzugsweise einen Haltekörper mittels welchem die Batteriezellen gehalten sind.

Die vorliegende Erfindung betrifft ferner ein Verfahren zum Herstellen einer Batterievorrichtung, insbesondere einer erfindungsgemäßen Batterievorrichtung.

Das Verfahren zum Herstellen einer Batterievorrichtung umfasst vorzugsweise Folgendes:
- Bereitstellen von zwei oder mehr als zwei Batteriemodulen;
- Stapeln der Batteriemodule entlang einer Stapelrichtung.

Günstig kann es sein, wenn die Batteriemodule der Batterievorrichtung miteinander und/oder zwischen zwei Endkörpern verspannt werden.

Beispielsweise ist es denkbar, dass jeweils zwei benachbarte Batteriemodule schichtweise miteinander verbunden und/oder miteinander verspannt werden.

Das erfindungsgemäße Verfahren zum Herstellen einer Batterievorrichtung, insbesondere zum Herstellen einer erfindungsgemäßen Batterievorrichtung, weist vorzugsweise einzelne oder mehrere der im Zusammenhang mit der erfindungsgemäßen Batterievorrichtung beschriebenen Merkmale und/oder Vorteile auf.

Weitere Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: einen schematischen Längsschnitt durch eine Ausführungsform einer Batterievorrichtung, welche mehrere Batteriemodule umfasst;
- Fig. 2: eine schematische perspektivische Darstellung eines Ausschnitts eines Batteriemoduls der Batterievorrichtung aus Fig. 1;
- Fig. 3: eine vergrößerte Darstellung des Bereichs III in Fig. 2;
- Fig. 4: eine schematische perspektivische Darstellung eines Teilschnitts eines Batteriemoduls der Batterievorrichtung aus Fig. 1;
- Fig. 5: eine vergrößerte Darstellung des Bereichs V in Fig. 4;
- Fig. 6: eine schematische Draufsicht auf einen Ausschnitt eines Batteriemoduls der Batterievorrichtung aus Fig. 1;
- Fig. 7: eine schematische perspektivische Darstellung eines Ausschnitts eines Batteriemoduls der Batterievorrichtung aus Fig. 1 von unten;
- Fig. 8: eine schematische perspektivische Darstellung eines Ausschnitts eines Batteriemoduls der Batterievorrichtung aus Fig. 1 von oben;
- Fig. 9: eine vergrößerte Darstellung des Bereichs IX in Fig. 7;
- Fig. 10: eine vergrößerte Darstellung des Bereichs X in Fig. 8;
- Fig. 11: einen schematischen Schnitt durch ein Batteriemodul der Batterievorrichtung aus Fig. 1 entlang der Linie XI-XI in Fig. 6;
- Fig. 12: einen schematischen Schnitt durch ein Batteriemodul der Batterievorrichtung aus Fig. 1 entlang der Linie XII-XII in Fig. 6;
- Fig. 13: einen schematischen Schnitt durch ein Batteriemodul der Batterievorrichtung aus Fig. 1 entlang der Linie XIII-XIII in Fig. 6;
- Fig. 14: eine schematische perspektivische Darstellung eines Ausschnitts von aufeinander gestapelten Bodenelementen und Abstandshalterelementen einer Batterievorrichtung aus Fig. 1;
- Fig. 15: eine explodierte schematische perspektivische Darstellung eines Ausschnitts der Bodenelemente und der Abstandshalterelemente aus Fig. 14;
- Fig. 16: eine schematische Draufsicht auf ein Temperierelement einer Batterievorrichtung aus Fig. 1;
- Fig. 17: eine schematische perspektivische Darstellung eines Ausschnitts einer weiteren Ausführungsform einer Batterievorrichtung;
- Fig. 18: einen Ausschnitt einer schematischen perspektivischen Darstellung einer weiteren Ausführungsform einer Batterievorrichtung;
- Fig. 19: einen Ausschnitt einer schematischen perspektivischen Darstellung eines Endkörpers der Batterievorrichtung aus Fig. 18;
- Fig. 20: eine schematische Darstellung eines ersten Verfahrensschritts einer Ausführungsform eines Verfahrens zum Fixieren von Batteriezellen;
- Fig. 21: eine schematische Darstellung eines an den ersten Verfahrensschritt aus Fig. 20 anschließenden zweiten Verfahrensschritts der Ausführungsform eines Verfahrens zum Fixieren von Batteriezellen;
- Fig. 22: eine schematische Darstellung eines an den zweiten Verfahrensschritt aus Fig. 21 anschließenden dritten Verfahrensschritts der Ausführungsform eines Verfahrens zum Fixieren von Batteriezellen;
- Fig. 23: eine schematische Darstellung von in einem verformten Lagenelement fixierten Batteriezellen;
- Fig. 24: eine schematische Darstellung der in dem verformten Lagenelement fixierten Batteriezellen, wobei das verformte Lagenelement einen Haltekörper bildet und der Haltekörper mit einem Bodenelement eines Batteriemoduls einer Batterievorrichtung verbunden ist; und
- Fig. 25: eine vergrößerte Darstellung des Bereichs XXV in Fig. 24.

Gleiche oder funktional äquivalente Elemente sind in sämtlichen Figuren mit denselben Bezugszeichen versehen.

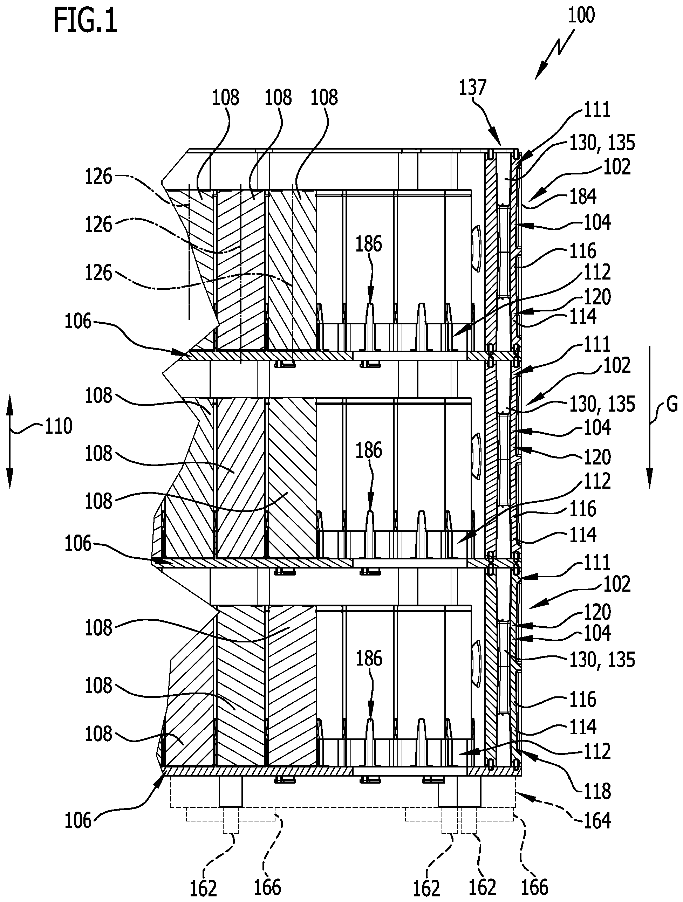

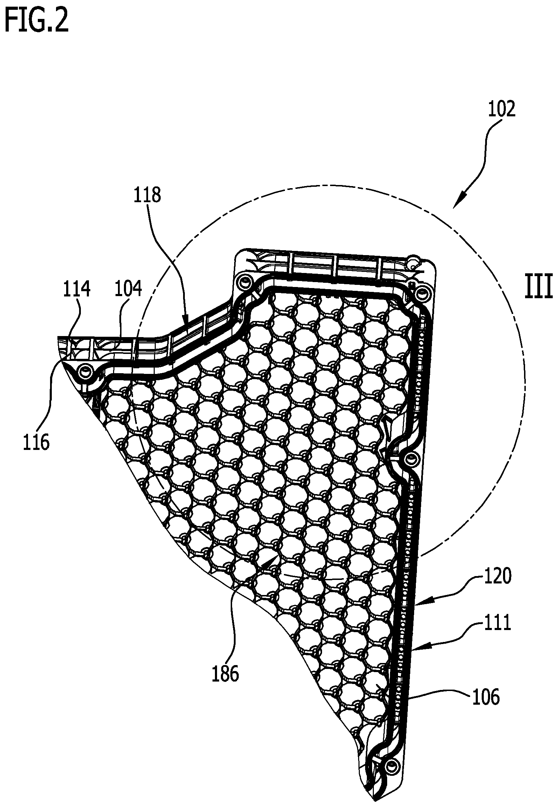

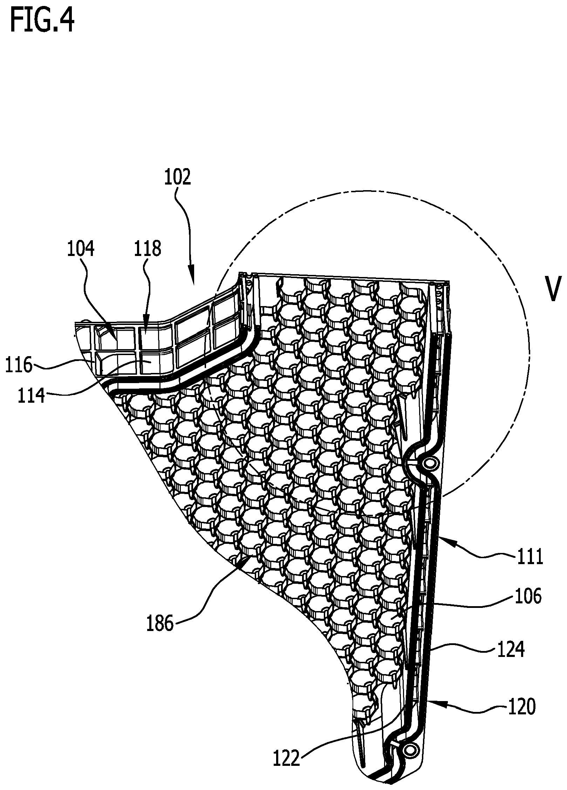

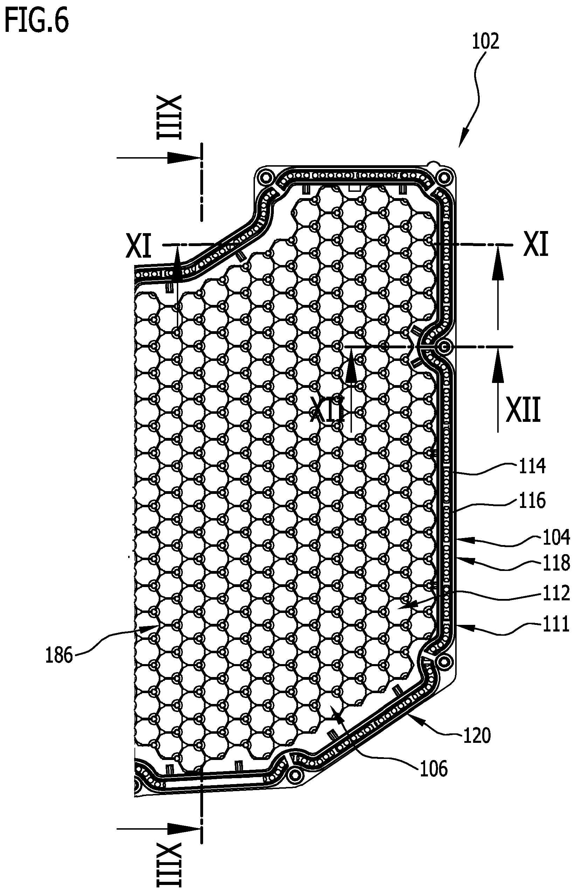

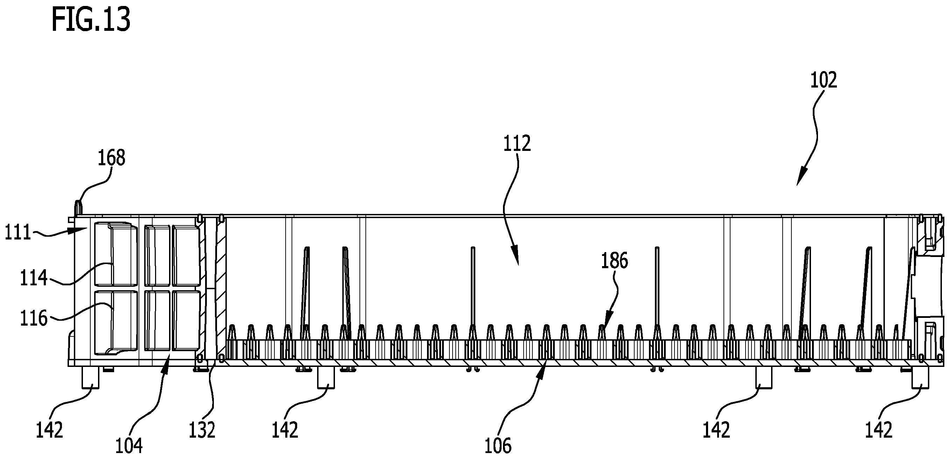

Die Fig. 1 bis 16 zeigen eine Ausführungsform einer als Ganzes mit 100 bezeichneten Batterievorrichtung.

Die Batterievorrichtung 100 umfasst vorzugsweise mehrere Batteriemodule 102.

Günstig kann es sein, wenn die Batteriemodule 102 der Batterievorrichtung 100 selbsttragend ausgebildet sind.

Vorzugsweise umfasst jedes Batteriemodul 102 ein Rahmenelement 104, ein Bodenelement 106 sowie mehrere Batteriezellen 108.

Vorzugsweise sind einzelne oder mehrere, insbesondere sämtliche, Batteriemodule 102 der Batterievorrichtung 100 identisch ausgebildet.

Insbesondere ist es denkbar, dass die Rahmenelemente 104 und/oder die Bodenelemente 106 sämtlicher Batteriemodule 102 der Batterievorrichtung 100 identisch ausgebildet sind.

Die Rahmenelemente 104 sind vorzugsweise aus einem Kunststoffmaterial hergestellt, insbesondere spritzgegossen.

Vorzugsweise sind die Rahmenelemente 104 Kunststoffspritzgussbauteile.

Günstig kann es sein, wenn die Bodenelemente 106 aus einem metallischen Material hergestellt sind.

Die Bodenelemente 106 der Batteriemodule 102 sind vorzugsweise Aluminiumplatten. Günstig kann es insbesondere sein, wenn die Bodenelemente 106 der Batteriemodule AlMgSi0,5 umfassen oder aus diesem gebildet sind.

Mittels eines metallischen Bodenelements 106 ist vorzugsweise Wärme von den Batteriezellen 108 eines jeweiligen Batteriemoduls 102 weg leitbar.

Die Batteriezellen 108 sind vorzugsweise galvanische Zellen, insbesondere sogenannte Sekundärzellen, welche vorzugsweise wiederaufladbar sind.

Günstig kann es sein, wenn die Batteriemodule 102 der Batterievorrichtung 100 entlang einer Stapelrichtung 110 angeordnet oder anordenbar sind.

Vorzugsweise umfassen die Batteriemodule 102 in den Figuren zeichnerisch nicht dargestellte elektrische Kontaktierelemente, mittels welcher zwei benachbarte Batteriemodule 102 miteinander durch Stapeln der Batteriemodule 102 entlang der Stapelrichtung 110 in Reihe verschaltbar sind.

Günstig kann es sein, wenn ein jeweiliges Batteriemodul 102 der Batterievorrichtung 100 eine in den Figuren zeichnerisch nicht dargestellte Detektionseinrichtung zur Detektion der Zellspannungen der Batteriezellen 108 des Batteriemoduls 102 und/oder zur Detektion der Temperaturen der Batteriezellen 108 des Batteriemoduls 102 umfasst.

Günstig kann es ferner sein, wenn ein jeweiliges Batteriemodul 102 der Batterievorrichtung 100 einen in den Figuren zeichnerisch nicht dargestellten Balancer zum Balancing der Batteriezellen 108 des Batteriemoduls 102 umfasst.

Beispielsweise ist es denkbar, dass ein jeweiliges Batteriemodul 102 ein erstes Kontaktierelement und ein zweites Kontaktierelement umfasst, wobei das erste und das zweite Kontaktierelement in der Stapelrichtung 110 auf einander abgewandten Seiten des Batteriemoduls 102 angeordnet sind.

Vorzugsweise sind das erste Kontaktierelement und das zweite Kontaktierelement eines jeweiligen Batteriemoduls 102 derart angeordnet, dass das erste Kontaktierelement eines ersten Batteriemoduls 102 zweier benachbarter Batteriemodule 102 und das zweite Kontaktierelement eines zweiten Batteriemoduls 102 zweier benachbarter Batteriemodule 102 miteinander in elektrisch leitendem Kontakt stehen.

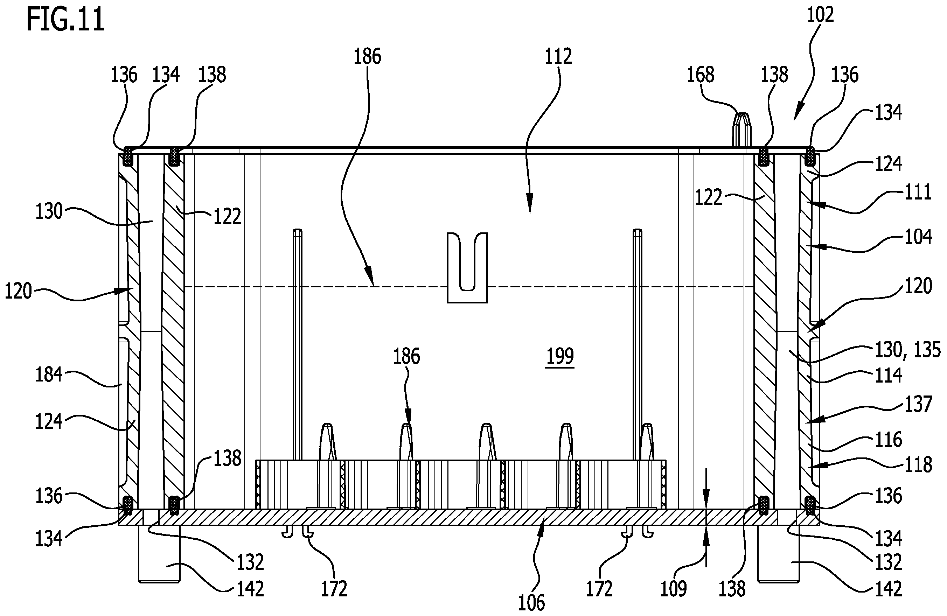

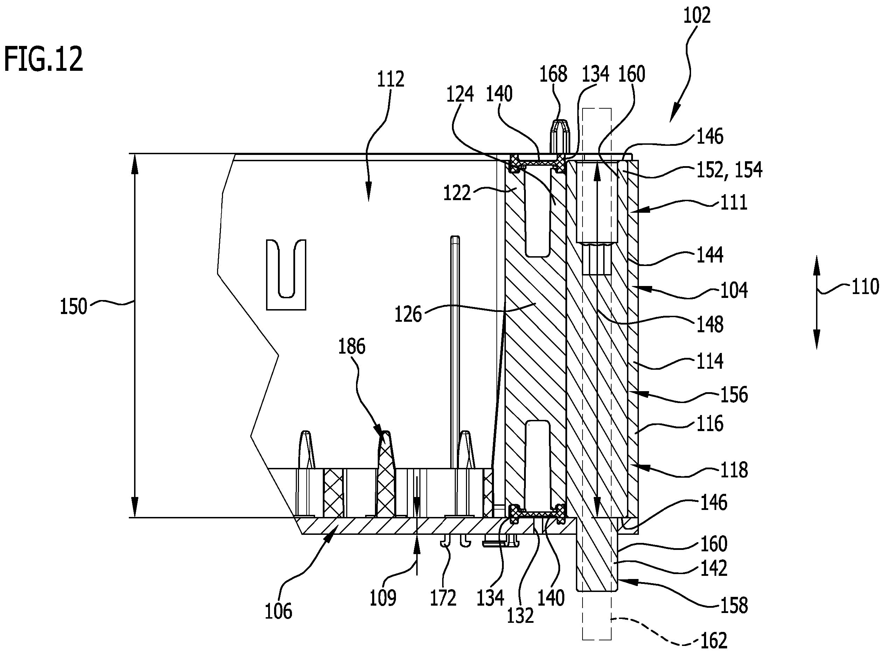

Vorzugsweise weisen die Bodenelemente 106 parallel zu der Stapelrichtung 110 eine mittlere Materialstärke 109 im Bereich von ungefähr 2 mm bis ungefähr 6 mm auf, beispielsweise von ungefähr 4 mm (vergl. Fig. 11 und 12).

Die Batterievorrichtung 100 ist vorzugsweise derart anordenbar, dass die Stapelrichtung 110 der Batteriemodule 102 parallel zur Schwerkraftrichtung G verläuft. Die Batterievorrichtung 100 ist dabei insbesondere "stehend" angeordnet (vergl. Fig. 1).

Alternativ dazu ist es denkbar, dass die Batterievorrichtung 100 derart anordenbar ist, dass die Stapelrichtung 110 der Batteriemodule 102 im Wesentlichen senkrecht zur Schwerkraftrichtung G verläuft. Die Batterievorrichtung 100 ist dabei insbesondere "liegend" angeordnet.

Ein Batteriemodul 102 umfasst vorzugsweise mindestens ungefähr 50 Batteriezellen 108.

Beispielsweise ist es denkbar, dass ein Batteriemodul 102 ungefähr 200 bis ungefähr 600 Batteriezellen 108, beispielsweise ungefähr 400 Batteriezellen 108, umfasst.

Vorzugsweise sind die Rahmenelemente 104 der Batteriemodule 102 ringförmig geschlossen ausgebildet.

Vorzugsweise umfassen die Rahmenelemente 104 der Batteriemodule 102 eine ringförmig geschlossene Wandung 111. Das Rahmenelement 104 umfasst beispielsweise einen in den Figuren zeichnerisch nicht dargestellten Verbindungssteg, welcher zwischen zwei einander gegenüberliegenden Wandungsabschnitten der Wandung 111 des Rahmenelements 104 angeordnet ist und diese miteinander verbindet.

Günstig kann es dabei sein, wenn das Rahmenelement 104 und das Bodenelement 106 eines jeweiligen Batteriemoduls 102 einen insbesondere topfförmigen Aufnahmeraum 112 definieren, in welchem die Batteriezellen 108 des jeweiligen Batteriemoduls 102 aufgenommen sind.

Der Aufnahmeraum 112 eines Batteriemoduls 102 wird vorzugsweise von dem Rahmenelement 104 und von dem Bodenelement 106 des Batteriemoduls 102 sowie von dem Bodenelement 106 eines benachbarten Batteriemoduls 102 begrenzt.

Das Rahmenelement 104 eines jeweiligen Batteriemoduls 102 umgibt vorzugsweise sämtliche Batteriezellen 108 des Batteriemoduls 102, insbesondere in einer senkrecht zur Stapelrichtung 110 verlaufenden Richtung.

Die Rahmenelemente 104 der Batteriemodule 102 bilden vorzugsweise Gehäuseabschnitte 114 der Batterievorrichtung 100.

Die Rahmenelemente 104 der Batteriemodule 102 bilden dabei gemeinsam insbesondere eine Außenhaut 116 der Batterievorrichtung 100.

Dabei kann insbesondere vorgesehen sein, dass eine Oberfläche der Wandung 111 des jeweiligen Rahmenelements 104 einen Teil einer Oberfläche eines Gehäuses 118 der Batterievorrichtung 100 bildet.

Die Rahmenelemente 104 der Batteriemodule 102 der Batterievorrichtung 100 werden somit in einer senkrecht zu der Stapelrichtung 110 verlaufenden radialen Richtung vorzugsweise nicht von einer zusätzlichen Einhausung begrenzt.

Vorzugsweise können die Herstellungskosten der Batterievorrichtung 100 durch den Entfall einer zusätzlichen Einhausung reduziert werden.

Günstig kann es sein, wenn die Oberfläche der Wandung 111 des Rahmenelements 104 eines jeweiligen Batteriemoduls 102 mit einem metallischen Material beschichtet, insbesondere bedampft, ist. Vorzugsweise ist dabei eine elektromagnetische Verträglichkeit der Batterievorrichtung 100 erhöhbar.

Bei der in den Fig. 1 bis 16 dargestellten Ausführungsform der Batterievorrichtung 100 umfasst ein jeweiliges Rahmenelement 104 insbesondere eine Doppelwandung 120, die ein Innenwandungselement 122 und ein Außenwandungselement 124 umfasst.

Günstig kann es sein, wenn Längsachsen 126 der Batteriezellen 108 der Batteriemodule 102 im Wesentlichen parallel zu der Stapelrichtung 110 der Batteriemodule 102 angeordnet sind.

Vorzugsweise ist durch eine Anordnung der Längsachsen 126 der Batteriezellen 108 der Batteriemodule 102 parallel zu der Stapelrichtung 110 der Batteriemodule 102 eine Außenkontur der Rahmenelemente 104 der Batteriemodule 102 an einen zur Verfügung stehenden Bauraum, beispielsweise in einem Fahrzeug, optimal anpassbar.

Insbesondere ist der zur Verfügung stehende Bauraum, beispielsweise in einem Fahrzeug, optimal ausnutzbar.

Günstig kann es dabei sein, wenn ein Füllgrad des Aufnahmeraums 112 der Batteriemodule 102 der Batterievorrichtung 100 dadurch erhöht werden kann, dass die Längsachsen 126 der Batteriezellen 108 parallel zu der Stapelrichtung 110 der Batteriemodule 102 angeordnet sind.

Vorzugsweise ist durch Erhöhen des Füllgrads eine Energiespeicherkapazität der Batteriemodule 102 und insbesondere der Batterievorrichtung 100 erhöhbar.

Zur Erhöhung eines Füllgrads kann vorgesehen sein, dass die Batteriezellen 108 Rundzellen sind. Die Batteriezellen 108 sind dabei insbesondere zumindest näherungsweise rotationssymmetrisch zu der Längsachse 126 ausgebildet.

Durch Verwendung von Rundzellen ist der Aufnahmeraum 112 der Batteriemodule 102 vorzugsweise zumindest näherungsweise vollständig ausfüllbar.

Das Innenwandungselement 112 und/oder das Außenwandungselement 124 der Doppelwandung 120 sind vorzugsweise ringförmig geschlossen ausgebildet.

Vorzugsweise ist durch Vorsehen des Außenwandungselements 124 und/oder des Innenwandungselements 122 auch bei Versagen des Außenwandungselements 124, beispielsweise im Crashfall, eine geschlossene Hülle für die Batteriezellen 108 eines jeweiligen Batteriemoduls 102 bereitstellbar.

Das Innenwandungselement 122 und/oder das Außenwandungselement 124 sind vorzugsweise im Wesentlichen parallel zueinander angeordnet.

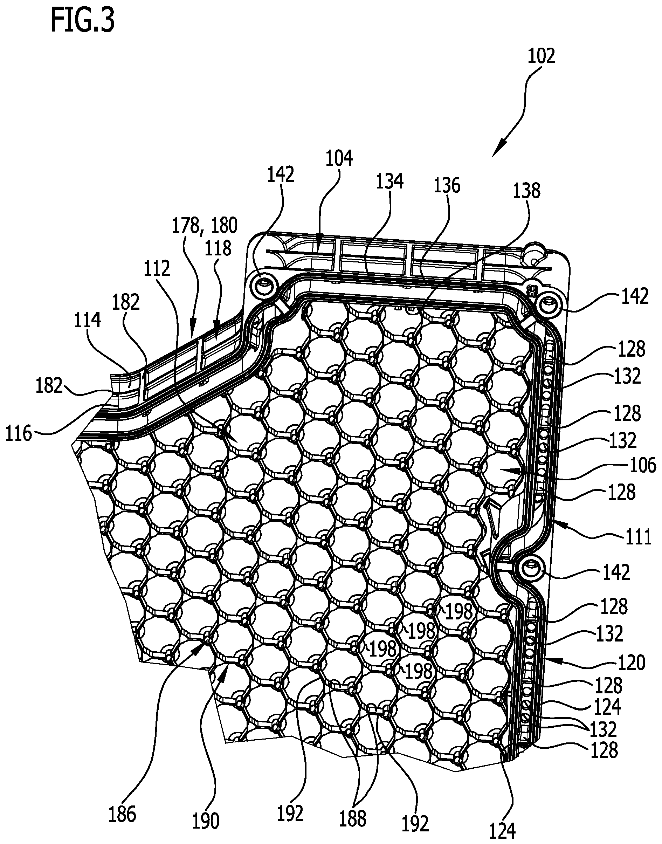

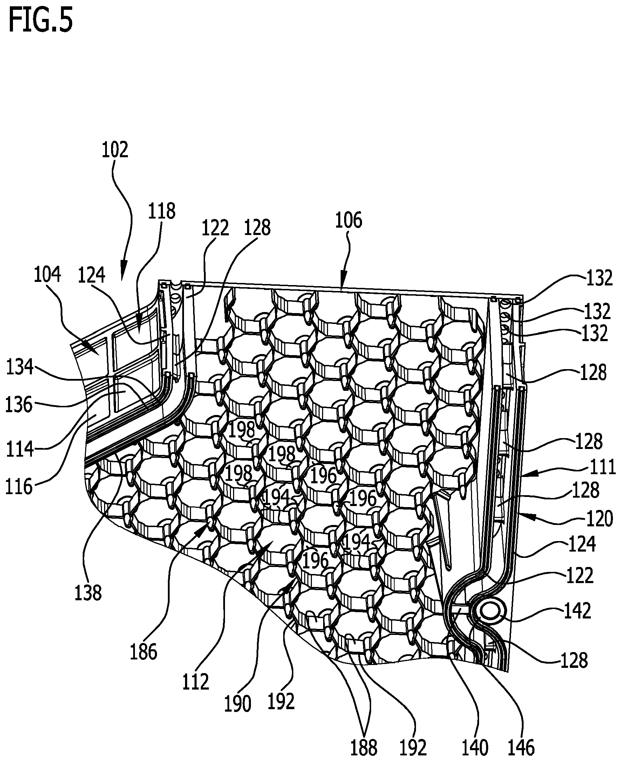

Einander gegenüberliegende Wandungsabschnitte des Innenwandungselements 122 und des Außenwandungselements 124 sind dabei insbesondere mittels mehrerer Verbindungsstege 128 miteinander verbunden (vergl. Fig. 3 und 5).

Vorzugsweise verlaufen die Verbindungsstege 128 parallel zu der Stapelrichtung 110 der Batterievorrichtung 100.

Günstig kann es sein, wenn die Verbindungsstege 128 beispielsweise in regelmäßigen Abständen zueinander angeordnet sind.

Die Doppelwandung 120 der Batteriemodule 102 ist vorzugsweise jeweils mit einem Temperiermedium durchströmbar, insbesondere parallel zu der Stapelrichtung 110 der Batterievorrichtung 100. Durch Durchströmen der Doppelwandung 120 mit einem Temperiermedium sind vorzugsweise Batteriezellen 108 der Batteriemodule 102 temperierbar.

Vorzugsweise kann durch Bereitstellen der mit einem Temperiermedium durchströmbaren Doppelwandung 120 ein Brandschutz und/oder ein verbesserter Propagationsschutz der Batterievorrichtung 100 realisiert werden, insbesondere durch Benetzung des Außenwandungselements 124 und/oder des Innenwandungselements 122 mit Temperiermedium.

Durch Benetzung des Außenwandungselements 124 und/oder des Innenwandungselements 122 mit Temperiermedium kann insbesondere ein Abbrennen oder Aufschmelzen des Rahmenelements 104 erschwert, verzögert und/oder verhindert werden.

Vorzugsweise ist durch Bereitstellen der mit einem Temperiermedium durchströmbaren Doppelwandung 120 ferner eine elektromagnetische Verträglichkeit (EMV) der Batterievorrichtung 100 erhöhbar, insbesondere wenn die Doppelwandung 120 mit einem elektrisch leitfähigen Temperiermedium durchströmt wird.

Günstig kann es ferner sein, wenn mittels der Doppelwandung 120 eine vergrößerte mechanische Festigkeit des Rahmenelements 104 bereitstellbar ist.

Die Doppelwandung 120 des Rahmenelements 104 begrenzt vorzugsweise einen Temperierraum 130 des jeweiligen Batteriemoduls 102, vorzugsweise zumindest zweiseitig (vergl. Fig. 11). Der Temperierraum 130 ist vorzugsweise ringförmig geschlossen.

Der Temperierraum 130 eines jeweiligen Batteriemoduls 102 wird in der Stapelrichtung 110 vorzugsweise ferner von dem Bodenelement 106 des Batteriemoduls 102 und von einem Bodenelement 106 eines benachbarten Batteriemoduls 102 begrenzt (vergl. Fig. 1).

Das Bodenelement 106 eines Batteriemoduls 102 umfasst dabei vorzugsweise eine oder mehrere Durchtrittsöffnungen 132, welche in den Temperierraum 130 des Batteriemoduls 102 münden.

Die Durchtrittsöffnungen 132 sind beispielsweise kreisrund.

Aus Übersichtlichkeitsgründen sind in den Fig. 3 und 5 lediglich einzelne Durchtrittsöffnungen 132 mit einem Bezugszeichen gekennzeichnet.

Der Temperierraum 130 wird vorzugsweise mit Ausnahme der Durchtrittsöffnungen 132 vollständig von dem Innenwandungselement 122, dem Außenwandungselement 124, von dem Bodenelement 106 des jeweiligen Batteriemoduls 102 und von einem Bodenelement 106 eines benachbarten Batteriemoduls 102 begrenzt.

Der Temperierraum 130 eines jeweiligen Batteriemoduls 102 weist in einem senkrecht zu der Stapelrichtung 110 der Batterievorrichtung 100 genommenen Querschnitt vorzugsweise eine Temperrierraumkontur auf.

Die Temperierräume 130 benachbarter Batteriemodule 102 sind vorzugsweise fluidisch miteinander verbunden, insbesondere mittels der Durchtrittsöffnungen 132 des Bodenelements 106 der Batteriemodule 102.

Die Durchtrittsöffnungen 132 bilden dabei insbesondere Temperiermediumeinlässe und/oder Temperiermediumauslässe, mittels welcher Temperiermedium in den Temperierraum 130 eines jeweiligen Batteriemoduls 102 einleitbar und/oder aus diesem herausleitbar ist.

Ein Temperierraum 130 bildet insbesondere jeweils einen Temperierkanal 135 einer Temperiervorrichtung 137 eines jeweiligen Batteriemoduls 102.

Günstig kann es sein, wenn die Durchtrittsöffnungen 132 im Wesentlichen entlang einer Linie angeordnet sind. Die Durchtrittsöffnungen 132 sind entlang der Linie vorzugsweise in regelmäßigen Abständen zueinander angeordnet. Dabei kann insbesondere vorgesehen sein, dass die Durchtrittsöffnungen 132 des Bodenelements 106 entlang einer Linie angeordnet sind, welche entlang der Temperrierraumkontur des Temperierraums 130 eines jeweiligen Batteriemoduls 102 verläuft.

Ein jeweiliges Batteriemodul 102 der Batterievorrichtung 100 umfasst vorzugsweise zwei Dichtelemente 134.

Mittels der Dichtelemente 134 der Batteriemodule 102 ist beispielsweise eine Dichtwirkung gemäß der Schutzklasse IP 6K9K erreichbar.

Vorzugsweise ist zwischen dem Rahmenelement 104 und dem Bodenelement 106 eines Batteriemoduls 102 ein erstes Dichtelement 134 angeordnet.

Günstig kann es sein, wenn zwischen dem Rahmenelement 104 und einem Bodenelement 106 eines benachbarten Batteriemoduls 102 ein zweites Dichtelement 134 angeordnet ist.

Günstig kann es beispielsweise sein, wenn ein Dichtelement 134 beim Herstellen des Rahmenelements 104 an das Rahmenelement 104 angespritzt ist.

Alternativ oder ergänzend dazu ist es möglich, dass ein oder mehrere Dichtelemente 134 an das Bodenelement 106 angespritzt werden, während ein noch zu beschreibender Haltekörper an das Bodenelement 106 angespritzt wird.

Beispielsweise ist es denkbar, dass auf einander abgewandten Seiten des Bodenelements 106 jeweils ein Dichtelement 134 an das Bodenelement 106 angespritzt ist.

Alternativ dazu ist es denkbar, dass ein Dichtelement 134 unabhängig von dem Rahmenelement 104 und/oder unabhängig von dem noch zu beschreibenden Haltekörper hergestellt wird. Vorzugsweise wird ein unabhängig von dem Rahmenelement 104 und/oder unabhängig von dem Haltekörper hergestelltes Dichtelement 134 in Dichtelementaufnahmenuten des Rahmenelements 104 eingelegt.

Die Dichtelemente eines Batteriemoduls 102 umfassen vorzugsweise einen ersten Dichtabschnitt 136 und einen zweiten Dichtabschnitt 138 (vergl. Fig. 3, 5, 10 und 11).

Der erste Dichtabschnitt 136 und/oder der zweite Dichtabschnitt 138 sind vorzugsweise ringförmig geschlossen.

Der erste Dichtabschnitt 136 und der zweite Dichtabschnitt 138 der Dichtelemente 134 umfassen vorzugsweise jeweils eine Dichtlippe, welche aus Übersichtlichkeitsgründen in den Figuren nicht mit einem Bezugszeichen gekennzeichnet ist.

Der erste Dichtabschnitt 136 und der zweite Dichtabschnitt 138 sind beispielsweise miteinander verbunden, beispielsweise mittels eines oder mehrerer Stegelemente 140 (vergl. Fig. 5, 10 und 12).

Vorzugsweise sind die Dichtelemente 134 dabei einteilig ausgebildet.

Günstig kann es sein, wenn radial innerhalb der Linie, entlang welcher die Durchtrittsöffnungen 132 angeordnet sind, und radial außerhalb der Linie, entlang welcher die Durchtrittsöffnungen 132 angeordnet sind, jeweils ein Dichtabschnitt 136, 138 eines Dichtelements 134 angeordnet ist.

Die Dichtabschnitte 136, 138 der Dichtelemente 134 sind vorzugsweise ringförmig geschlossen und verlaufen insbesondere im Wesentlichen parallel zu der Linie, entlang welcher die Durchtrittsöffnungen 132 angeordnet sind.

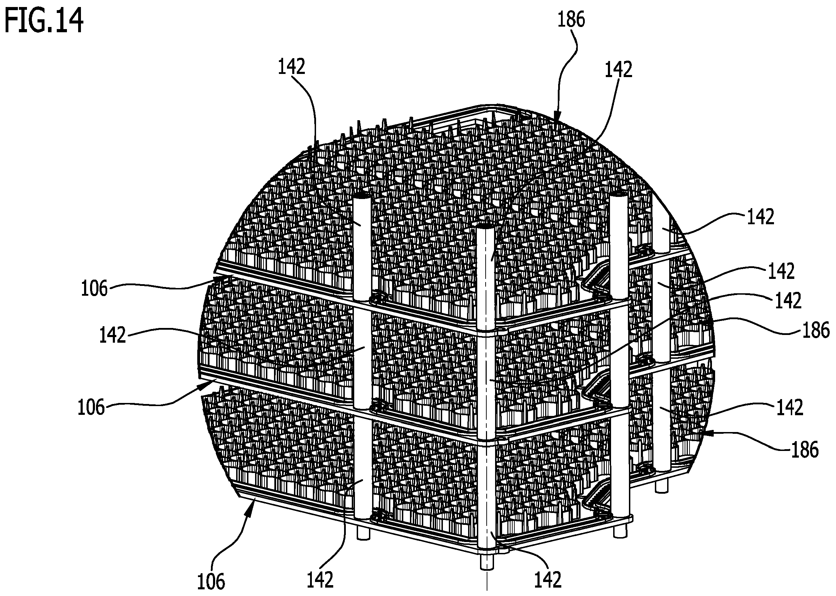

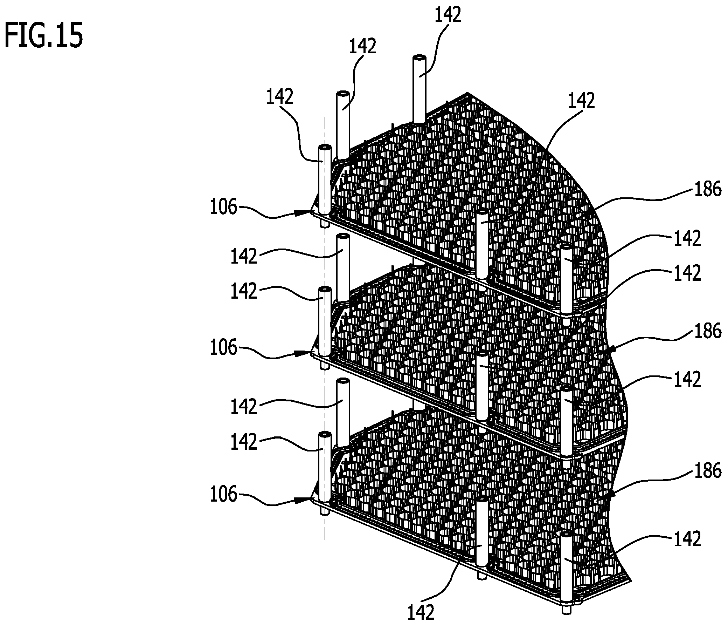

Vorzugsweise umfasst ein jeweiliges Batteriemodul 102 der Batterievorrichtung 100 ein oder mehrere Abstandshalterelemente 142, mittels welcher die Bodenelemente 106 der Batteriemodule 102 im Wesentlichen parallel zueinander angeordnet oder anordenbar sind (vergl. Fig. 14 und 15).

Günstig kann es sein, wenn die Abstandshalterelemente 142 eines Batteriemoduls 102 druckstabil ausgebildet sind.

Vorzugsweise weisen die Abstandshalterelemente 142 eines Batteriemoduls 102 eine höhere Druckstabilität auf als das Rahmenelement 104 des Batteriemoduls 102, insbesondere in einer parallel zu der Stapelrichtung 110 der Batterievorrichtung 100 verlaufenden Richtung.

Die Abstandshalterelemente 142 umfassen dabei vorzugsweise ein metallisches Material oder sind aus diesem gebildet.

Die Abstandshalterelemente 142 sind insbesondere in das Rahmenelement 104 eines jeweiligen Batteriemoduls 102 eingesetzt.

Das Rahmenelement 104 eines jeweiligen Batteriemoduls 102 umfasst vorzugsweise mehrere Aufnahmen 144, wobei in jeder Aufnahme 144 vorzugsweise ein Abstandshalterelement 142 angeordnet ist (vergl. Fig. 12).

Günstig kann es sein, wenn die Abstandshalterelemente 142 im Wesentlichen zylindrisch ausgebildet.

Vorzugsweise sind die Abstandshalterelemente 142 eines jeweiligen Batteriemoduls 100 in einer senkrecht zu der Stapelrichtung 110 der Batterievorrichtung 100 verlaufenden Richtung außerhalb der Doppelwandung 120 des Rahmenelements 104 eines Batteriemoduls 102 angeordnet.

Günstig kann es sein, wenn die Abstandshalterelemente 142 zweier benachbarter Batteriemodule 102 in der Stapelrichtung 110 der Batterievorrichtung 100 fluchtend angeordnet sind (vergl. Fig. 14 und 15).

Die Abstandshalterelemente 142 umfassen vorzugsweise jeweils zwei an einander abgewandten Seiten des Abstandshalterelements 142 angeordnete Anlageflächen 146 (vergl. Fig. 5, 10 und 12).

Vorzugsweise liegt ein jeweiliges Abstandshalterelement 142 mit einer ersten Anlagefläche 146 an dem Bodenelement 106 des jeweiligen Batteriemoduls 102 und mit einer zweiten Anlagefläche 146 an dem Bodenelement 106 eines benachbarten Batteriemoduls 102 an oder ist an dieses anlegbar.

Vorzugsweise ist dabei eine Krafteinleitung von den Abstandshalterelementen 142 in die Bodenelemente 106 realisierbar, insbesondere parallel zu der Stapelrichtung 110.

Insbesondere ist dabei eine Druckkraft von den Abstandshalterelementen 142 auf die an den Anlageflächen 146 der Abstandshalterelemente 142 anliegenden Bodenelemente 106 übertragbar.

Günstig kann es sein, wenn die zwei Anlageflächen 146 eines Abstandshalterelements 142 einen Abstand 148 voneinander aufweisen, welcher im Wesentlichen einer parallel zu der Stapelrichtung 110 genommenen Höhe 150 der Wandung 111, insbesondere der Doppelwandung 120, des Rahmenelements 104 eines Batteriemoduls 102 entspricht (vergl. Fig. 12).

Vorzugsweise kann dabei verhindert werden, dass die Rahmenelemente 104 der Batteriemodule 102, welche ein Kunststoffmaterial umfassen oder aus diesem gebildet sind, aufgrund einer parallel zu der Stapelrichtung 110 der Batterievorrichtung 100 auf die Batteriemodule 102 wirkenden Spannkraft komprimiert werden.

Vorzugsweise sind die Abstandshalterelemente 142 eines jeweiligen Batteriemoduls 102 Bolzenelemente 152 oder Hülsenelemente 154.

Als Hülsenelemente 154 ausgebildete Abstandshalterelemente 142 sind vorzugsweise hohlzylindrisch ausgebildet.

Es ist insbesondere denkbar, dass die Abstandshalterelemente 142 eines jeweiligen Batteriemoduls 102 in einem senkrecht zu der Stapelrichtung 110 der Batterievorrichtung 100 genommenen Querschnitt im Wesentlichen kreisförmig oder kreisringförmig ausgebildet sind.

Die Abstandshalterelemente 142 sind insbesondere rotationssymmetrisch zu einer Längsachse derselben ausgebildet.

Die Abstandshalterelemente 142 umfassen beispielsweise einen Abstandshalterabschnitt 156, in welchem die Abstandshalterelemente 142 insbesondere zylindrisch, beispielsweise kreiszylindrisch, ausgebildet sind.

Der Abstandshalterabschnitt 156 verläuft vorzugsweise zwischen den Anlageflächen 146 eines Abstandshalterelements 142.

Günstig kann es ferner sein, wenn die Abstandshalterelemente 142 ferner einen Einführabschnitt 158 umfassen, in welchem die Abstandshalterelemente 142 insbesondere zylindrisch, beispielsweise kreiszylindrisch, ausgebildet sind.

Der Einführabschnitt 158 eines Abstandshalterelements 142 ist vorzugsweise in den Abstandshalterabschnitt 156 eines in der Stapelrichtung 110 der Batterievorrichtung 100 benachbarten Abstandshalterelements 142 einführbar.

Bei der in den Fig. 1 bis 15 dargestellten Ausführungsform der Batterievorrichtung 100 sind die Batteriemodule 102 der Batterievorrichtung 100 beispielsweise mittels der Abstandshalterelemente 142 miteinander verspannt.

Die Abstandshalterelemente 142 umfassen dabei vorzugsweise jeweils Schraubelemente 160, wobei in der Stapelrichtung 110 der Batterievorrichtung 100 benachbarte Abstandshalterelemente 142 miteinander verschraubbar sind (vergl. Fig. 12).

Beispielsweise ist es denkbar, dass der Einführabschnitt 158 eines Abstandshalterelements 142 ein Außengewinde umfasst und/oder dass der Abstandshalterabschnitt 156 eines Abstandshalterelements 142 ein Innengewinde umfasst.

Günstig kann es dabei sein, wenn jeweils zwei benachbarte Batteriemodule 102 miteinander verspannt und/oder verschraubt werden.

Alternativ dazu ist es denkbar, dass die Batteriemodule 102 der Batterievorrichtung 100 mittels durch die Abstandshalterelemente 142 hindurchgeführter Spannelemente 162 verspannt sind, welche in den Fig. 1 und 12 gestrichelt dargestellt sind.

Vorzugsweise sind die Spannelemente 162 der Batterievorrichtung 100 durch als Hülsenelemente 154 ausgebildete Abstandshalterelemente 142 hindurchgeführt.

Dabei kann vorgesehen sein, dass die Batteriemodule 102 der Batterievorrichtung 100 zwischen zwei Endkörpern 164 mittels der Spannelemente 162 verspannt oder verspannbar sind.

Die zwei Endkörper 164 umfassen beispielsweise ein metallisches Material oder sind aus diesem gebildet, insbesondere aus Stahl oder aus Aluminium.

Günstig kann es sein, wenn die zwei Endkörper 164 in den Figuren zeichnerisch nicht dargestellte Befestigungselemente umfassen, mittels welcher die Batterievorrichtung 100 an einer tragenden Struktur, beispielsweise an einer tragenden Struktur eines Fahrzeugs, festlegbar ist. Günstig kann es daher sein, wenn die Batterievorrichtung 100 ausschließlich mittels der Endkörper 164 an einer tragenden Struktur festlegbar ist.

Alternativ oder ergänzend dazu ist es denkbar, dass die Batteriemodule 102 der Batterievorrichtung 100 ferner jeweils einzelne oder mehrere weitere Befestigungselemente umfassen, mittels welcher die Batterievorrichtung 100 an einer tragenden Struktur festlegbar ist.

Durch Verspannen der Batteriemodule 102 wird vorzugsweise im Wesentlichen keine Kraft auf die Batteriezellen 108 der Batteriemodule 102 ausgeübt, insbesondere parallel zu der Stapelrichtung 110 und/oder parallel zu einer Längsachse 126 der Batteriezellen 108 eines jeweiligen Batteriemoduls 102.

Günstig kann es sein, wenn die Spannelemente 162 sogenannte Zuganker sind.

Die Spannelemente 162 umfassen beispielsweise ein metallisches Material oder sind aus diesem gebildet, insbesondere Stahl oder Aluminium.

Als Spannelemente 162 ausgebildete Zuganker umfassen beispielsweise jeweils einen metallischen Stab, welcher ein in den Figuren zeichnerisch nicht dargestelltes Gewinde aufweist.

Der Stab wird zum Verspannen der Batteriemodule 102 vorzugsweise parallel zu der Stapelrichtung 110 angeordnet.

Beispielsweise wird zum Verspannen der Batteriemodule 102 zwischen den zwei Endkörpern 164 ein Schraubelement 166, insbesondere ein Mutternelement, auf ein jeweiliges Spannelement 162 aufgeschraubt.

Günstig kann es dabei sein, wenn die Batteriemodule 102 in der Stapelrichtung 110 mit einer Spannkraft verspannt werden, welche einer Spannung von höchstens ungefähr 30 %, beispielsweise von höchstens ungefähr 50 %, einer oberen Streckgrenze eines Materials der Spannelemente 162 entspricht.

Vorzugsweise werden die Batteriemodule 102 der Batterievorrichtung 100 vor dem Verspannen derselben miteinander verpresst, insbesondere in der Stapelrichtung 110 der Batterievorrichtung 100.

Günstig kann es dabei sein, wenn Dichtelemente 134 der Batteriemodule 102 beim Verpressen der Batteriemodule 102 zwischen einem Rahmenelement 104 und einem Bodenelement 106 verformt, insbesondere komprimiert, werden.

Vorzugsweise umfassen die Rahmenelemente 104 der Batteriemodule 102 einen oder mehrere parallel zu der Stapelrichtung 110 der Batterievorrichtung 100 von dem Rahmenelement 104 weg ragende Stapelvorsprünge 168 (vergl. Fig. 11 bis 13).

Günstig kann es ferner sein, wenn die Rahmenelemente 104 der Batteriemodule 102 eine oder mehrere Stapelausnehmungen 170 umfassen, in welchen jeweils ein Stapelvorsprung 168 eines Rahmenelements 104 eines benachbarten Batteriemoduls 102 aufnehmbar ist.

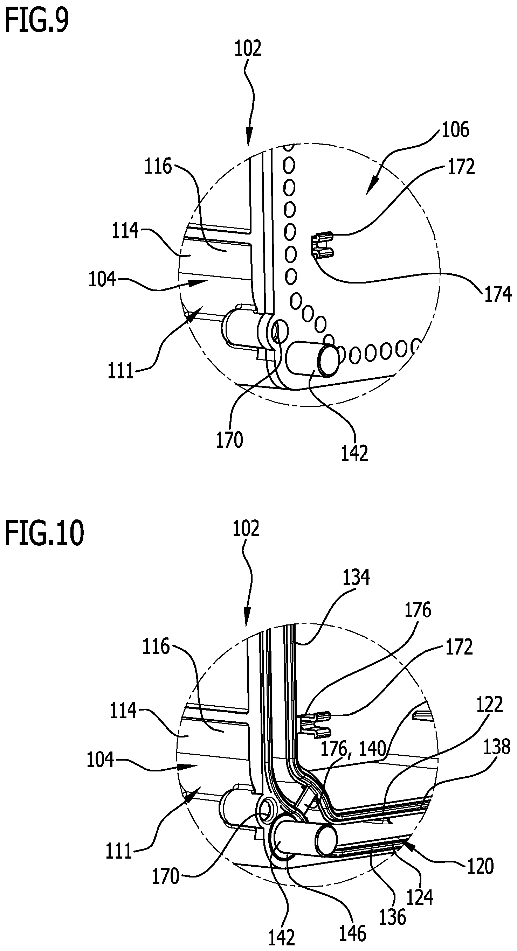

Die Stapelvorsprünge 168 und die Stapelausnehmungen 170 eines jeweiligen Rahmenelements 104 sind vorzugsweise auf einander abgewandten Seiten des Rahmenelements 104 angeordnet (vergl. Fig. 9 und 10).

Vorzugsweise ist mittels der Stapelvorsprünge 168 und/oder mittels der Stapelausnehmungen 170 ein Stapeln der Batteriemodule 102 der Batterievorrichtung 100 in der Stapelrichtung 110 erleichterbar.

Günstig kann es ferner sein, wenn das Rahmenelement 104 eines jeweiligen Batteriemoduls 102 mit dem Bodenelement 106 des Batteriemoduls 102 kraft- und/oder formschlüssig verbunden oder verbindbar, beispielsweise verklipst, ist.

Vorzugsweise umfasst das Rahmenelement 104 eines jeweiligen Batteriemoduls 102 einen oder mehrere Rastvorsprünge 172.

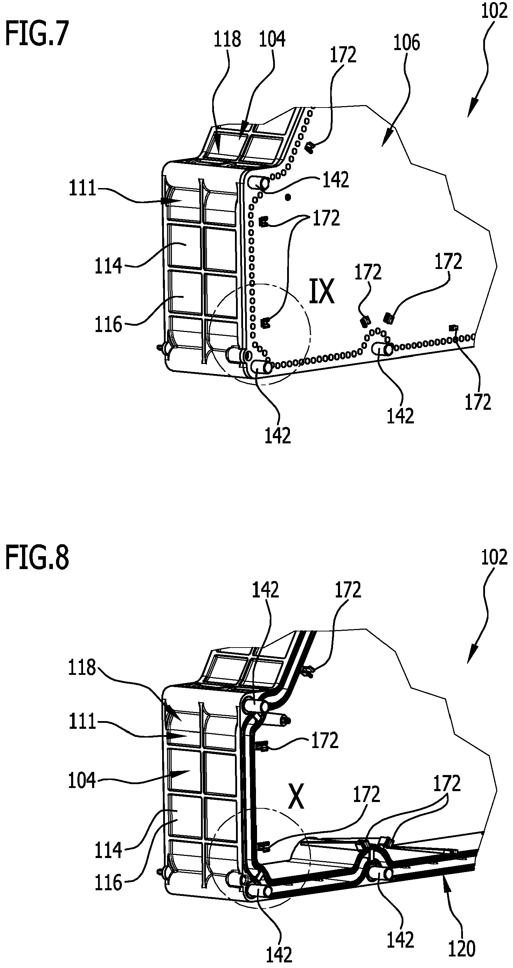

Vorzugsweise umfasst das Bodenelement 106 eines jeweiligen Batteriemoduls 102 ferner eine oder mehrere Rastausnehmungen 174, in welche die Rastvorsprünge 172 des Rahmenelements 104 einführbar sind (vergl. Fig. 7 bis 12).

Die Rastvorsprünge 172 eines Rahmenelements 104 umfassen vorzugsweise jeweils zwei Rastelemente 176. Vorzugsweise umfasst ein Rastelement 176 eines Rastvorsprungs 172 jeweils einen Rasthaken. Aus Übersichtlichkeitsgründen sind die Rasthaken in den Figuren nicht mit einem Bezugszeichen gekennzeichnet.

In den Fig. 7 bis 12 sind die Rastvorsprünge 172 und die Rastausnehmungen 174 radial innerhalb eines Rahmenelements 104 eines jeweiligen Batteriemoduls 102 angeordnet.

Alternativ dazu ist es denkbar, dass die Rastvorsprünge 172 radial außerhalb der Wandung 111, insbesondere radial außerhalb der Doppelwandung 120, des Rahmenelements 104 eines jeweiligen Batteriemoduls 102 angeordnet sind.

Günstig kann es dabei insbesondere sein, wenn der den Aufnahmeraum 112 eines jeweiligen Batteriemoduls 102 begrenzende Teil des Bodenelements 106 des jeweiligen Batteriemoduls 102 keine Rastausnehmungen 174 und somit insbesondere keine Durchtrittsöffnungen aufweist.

Beispielsweise kann somit ein zumindest teilweises Ausgießen des Aufnahmeraums 112 mit Vergussmasse und/der ein Festlegen der Batteriezellen 108 an dem Bodenelement 106 mittels Vergussmasse erleichtert werden.

Vorzugsweise hintergreifen die Rasthaken der zwei Rastelemente 176 eines Rastvorsprungs 172 das Bodenelement 106 eines jeweiligen Batteriemoduls 102, wenn das Rahmenelement 104 mit dem Bodenelement 106 kraft- und/oder formschlüssig verbunden, insbesondere verklipst, ist.

Die Rahmenelemente 104 umfassen an einer Umfangsfläche vorzugsweise ferner eine Versteifungsstruktur 178, beispielsweise eine Versteifungsrippenstruktur 180.

Mittels der Versteifungsstruktur 178 ist vorzugsweise eine Steifigkeit eines beispielsweise spritzgegossenen Rahmenelements 104 vergrößerbar.

Die Versteifungsrippenstruktur 178 der Rahmenelemente umfasst vorzugsweise mehrere Rippenelemente 182.

Die Bodenelemente 106 der Batteriemodule 102, welche vorzugsweise ein metallisches Material umfassen oder aus diesem gebildet sind, bilden vorzugsweise einen Teil einer Außenoberfläche 184 der Batterievorrichtung 100 (vergl. Fig. 1 und 11), insbesondere in einer senkrecht zu der Stapelrichtung 110 der Batterievorrichtung 100 verlaufenden Richtung.

Die Bodenelemente 106 bilden insbesondere einen ringförmig geschlossenen Teil der Außenoberfläche 184 der Batterievorrichtung 100. Insbesondere bilden die Bodenelemente 106 der Batteriemodule 102 jeweils ringförmig geschlossene Oberflächenabschnitte der Außenoberfläche 184 der Batterievorrichtung 100.

Die durch die Bodenelemente 106 der Batteriemodule 102 gebildeten ringförmig geschlossenen Oberflächenabschnitte sind in der Stapelrichtung 110 der Batterievorrichtung 100 vorzugsweise durch die Rahmenelemente 104 der Batteriemodule 102 voneinander getrennt.

Wenn die Bodenelemente 106 der Batteriemodule 102 sich bis zu der Außenoberfläche 184 der Batterievorrichtung 100 erstrecken, ist mittels der Bodenelemente 106 vorzugsweise Wärme zu der Außenoberfläche 184 der Batterievorrichtung 100 abführbar.

Vorzugsweise sind die Batteriezellen 108 eines jeweiligen Batteriemoduls 102 thermisch mit dem Bodenelement 106 des Batteriemoduls 102 gekoppelt.

Beispielsweise ist es denkbar, dass die Batteriezellen 108 eines jeweiligen Batteriemoduls 102 mittels einer Wärmeleitpaste und/oder mittels einer Vergussmasse thermisch mit dem Bodenelement 106 des Batteriemoduls 102 gekoppelt sind.

Vorzugsweise sind die Batteriezellen 108 eines jeweiligen Batteriemoduls 102 an dem Bodenelement 106 des Batteriemoduls 102 festgelegt.

Die Batteriezellen 108 und das Bodenelement 106 stehen dabei insbesondere nicht in unmittelbarem Materialkontakt.

Insbesondere ist dabei eine passive Temperierung der Batterievorrichtung 100 mittels der Bodenelemente 106 realisierbar.

Insbesondere ist dadurch, dass die Bodenelemente 106 einen Teil der Außenoberfläche 184 der Batterievorrichtung 100 bilden, eine Wärmeableitung zu der Außenoberfläche 184 der Batterievorrichtung 100 mittels der Bodenelemente 106 realisierbar.

Insbesondere sind dabei die Batteriezellen 108 eines jeweiligen Batteriemoduls 102 mittels der Bodenelemente 106 kühlbar.

Günstig kann es dabei sein, wenn die Bodenelemente 106 eine Wärmeleitfähigkeit von mindestens ungefähr 100 W/m*K aufweisen, beispielsweise von mindestens ungefähr 150 W/m*K.

Wenn die Bodenelemente 106 Aluminium umfassen oder aus diesem gebildet sind, insbesondere AlMgSi0,5, weisen diese vorzugsweise eine Wärmeleitfähigkeit von ungefähr 186 W/m*K auf.

Bei einer zeichnerisch nicht dargestellten Ausführungsform der Batterievorrichtung 100 ist es denkbar, dass die Bodenelemente 106 der Batteriemodule 102 senkrecht zu der Stapelrichtung 110 der Batterievorrichtung 100 zumindest abschnittsweise, beispielsweise ringförmig geschlossen, über die Rahmenelemente 104 der Batteriemodule 102 weg ragen.

Es kann vorgesehen sein, dass die Batterievorrichtung 100 einen Kühlkörper und/oder ein Temperierelement umfasst, welche mit einzelnen oder mehreren, vorzugsweise mit sämtlichen, Bodenelementen 106 der Batterievorrichtung 100 thermisch gekoppelt sind.

Der Kühlkörper umfasst vorzugsweise eine oder mehrere Kühlrippen.

Der Kühlkörper und/oder das Temperierelement sind dabei insbesondere an der Außenoberfläche 184 der Batterievorrichtung 100 angeordnet.

Vorzugsweise steht der Kühlkörper in direktem Materialkontakt mit einem oder mehreren, vorzugsweise mit sämtlichen, Bodenelementen 106 der Batterievorrichtung 100, insbesondere jeweils an dem Teil der Außenoberfläche 184 der Batterievorrichtung 100, welcher von den jeweiligen Bodenelementen 106 der Batteriemodule 102 gebildet wird.

Günstig kann es ferner sein, wenn die Bodenelemente 106 einen oder mehrere in den Figuren zeichnerisch nicht dargestellte Temperierkanäle, beispielsweise eine Temperierkanalstruktur, umfasst.

Ein Temperierkanal, insbesondere eine Temperierkanalstruktur, der Bodenelemente 106 ist vorzugsweise mittels eines Temperiermediums durchströmbar.

Beispielsweise ist es denkbar, dass die Bodenelemente 106 mehrlagig ausgebildet sind und einen Temperierkanal, insbesondere eine Temperierkanalstruktur, begrenzen.

Eine Temperierkanalstruktur der Bodenelemente 106 ist beispielsweise mittels Rollbonden hergestellt.

Günstig kann es sein, wenn durch Vorsehen eines Temperierkanals in den Bodenelementen 106 eine aktive Temperierung der Batterievorrichtung 100 mittels der Bodenelemente 106 realisierbar ist.

Vorzugsweise umfassen die Batteriemodule 102 ferner einen Haltekörper 186 zum Halten der Batteriezellen 108 des jeweiligen Batteriemoduls 102.

Die Haltekörper 186 sind vorzugsweise mit dem Bodenelement 106 eines jeweiligen Batteriemoduls 102 verbunden, insbesondere stoffschlüssig.

Die Haltekörper 186 sind insbesondere einstückig ausgebildet.

Vorzugsweise umfassen die Haltekörper 186 ein Kunststoffmaterial oder sind aus diesem gebildet.

Die Haltekörper 186 sind insbesondere Spritzgussbauteile, insbesondere einstückige Spritzgussbauteile.

Der Haltekörper 186 umfasst vorzugsweise mehrere Aufnahmeöffnungen 188, in welchen jeweils eine Batteriezelle 108 des Batteriemoduls 102 aufgenommen ist.

Aus Übersichtlichkeitsgründen sind in den Fig. 3 und 5 lediglich einzelne Aufnahmeöffnungen 188 mit einem Bezugszeichen gekennzeichnet.

Beispielsweise ist es denkbar, dass der Haltekörper 186 ungefähr 200 bis ungefähr 600 Aufnahmeöffnungen 188, beispielsweise ungefähr 400 Aufnahmeöffnungen 188, umfasst.

Eine Anzahl der Aufnahmeöffnungen 188 des Haltekörpers entspricht vorzugsweise im Wesentlichen einer Anzahl der Batteriezellen 108 eines Batteriemoduls 102.

Vorzugsweise umfassen die Haltekörper 186 der Batteriemodule 102 eine Wabenstruktur 190 oder werden durch eine Wabenstruktur 190 gebildet.

Die Wabenstruktur 190 der Haltekörper 186 umfasst vorzugsweise mehrere insbesondere polygonale Halteelemente 192, welche die Aufnahmeöffnungen 188 begrenzen.

Die Halteelemente 192 sind beispielsweise regelmäßige Sechsecke.

Vorzugsweise sind die Halteelemente 192 jeweils benachbart zu mehreren weiteren Halteelementen 192 angeordnet.

Beispielsweise ist es denkbar, dass Halteelemente 192 der Wabenstruktur 190 jeweils benachbart zu sechs weiteren Halteelementen 192 angeordnet sind.

Die Aufnahmeöffnungen 188 eines Halteelements 192 werden vorzugsweise von mehreren Halteelementstegen 194 begrenzt, beispielsweise von jeweils sechs Halteelementstegen 194.

Vorzugsweise sind mehrere Halteelementstege 194 benachbarter Halteelemente 192 an einem Knoten 196 miteinander verbunden.

Günstig kann es insbesondere sein, wenn an dem Knoten 196 drei Halteelementstege 194 dreier benachbarter Halteelemente 192 miteinander verbunden sind.

Vorzugsweise sind die Haltekörper 186 jeweils an das Bodenelement 106 eines Batteriemoduls 102 angespritzt.

Günstig kann es dabei sein, wenn die Haltekörper 186 an mehreren Knoten 196 angeordnete Verbindungsbereiche 198 umfassen, an welchen die Haltekörper 186 jeweils mit dem Bodenelement 106 verbunden sind, beispielsweise stoffschlüssig.

Vorzugsweise sind die Haltekörper 186 an den Verbindungsbereichen 198 an die Bodenelemente 106 angespritzt.

Beispielsweise ist es denkbar, dass an ungefähr 50 % der Knoten 196 des Haltekörpers 186 ein Verbindungsbereich 198 angeordnet ist.

Alternativ zu dem in den Fig. 1 bis 6 und 11 bis 15 dargestellten Haltekörper 186 kann ein jeweiliges Batteriemodul 102 einen lediglich in Fig. 11 gestrichelt dargestellten Haltekörper 186 zum Halten der Batteriezellen 108 umfassen.

Die Batteriezellen 108 eines jeweiligen Batteriemoduls 102 sind dabei vorzugsweise mittels Vergussmasse 199 stoffschlüssig mit dem Bodenelement 106 des Batteriemoduls 102 verbunden.

Die Vergussmasse 199 umfasst beispielsweise Polyurethan, Silikon und/oder ein Epoxidharz.

Die Batteriezellen 108 sind insbesondere in die Vergussmasse 199 eingebettet.

Die Vergussmasse 199 bildet dabei insbesondere den in Fig. 11 gestrichelt dargestellten Haltekörper 186.

Günstig kann es sein, wenn die Batteriezellen 108 teilweise oder vollständig in die Vergussmasse 199 eingebettet sind.

Beispielsweise ist es denkbar, dass mindestens ungefähr 30 %, beispielsweise mindestens ungefähr 50 %, einer jeweiligen Batteriezelle 108 bezogen auf eine parallel zu einer Längsachse 126 der Batteriezelle 108 gemessene Länge derselben in Vergussmasse 199 eingebettet ist.

Vorzugsweise sind die Batteriezellen 108 eines jeweiligen Batteriemoduls 102 mittels der Vergussmasse 199 thermisch mit dem Bodenelement 106 gekoppelt und/oder elektrisch von diesem isoliert.

Günstig kann es sein, wenn die Batteriezellen 108 mittels der Vergussmasse 199 in einem Abstand im Bereich von ungefähr 0,2 mm bis ungefähr 1,5 mm, vorzugsweise im Bereich von ungefähr 0,3 mm bis ungefähr 1 mm, von dem Bodenelement 106 angeordnet sind.

Vorzugsweise sind die zwei Dichtelemente 134 eines jeweiligen Batteriemoduls 102 mit dem Bodenelement 106 des Batteriemoduls 102 verbunden, insbesondere stoffschlüssig.

Die Dichtelemente 134 sind dabei vorzugsweise jeweils an das Bodenelement 106 angespritzt.

Die zwei Dichtelemente 134 eines Batteriemoduls 102 sind vorzugsweise an zwei einander gegenüberliegenden Seiten des Bodenelements 106 an das Bodenelement 106 angespritzt.

Die Bodenelemente 106 sind vorzugsweise Hybridbauteile, insbesondere Metall-Elastomer-Hybridbauteile.

Vorzugsweise umfassen einzelne, mehrere oder sämtliche Batteriemodule 102 der Batterievorrichtung 100 jeweils ein in den Figuren zeichnerisch nicht dargestelltes Entgasungselement zum Entgasen des Aufnahmeraums 112 des jeweiligen Batteriemoduls 102.

Günstig kann es insbesondere sein, wenn jedes einzelne Batteriemodul 102 jeweils ein Entgasungselement umfasst.

Vorzugsweise ist das Entgasungselement eines jeweiligen Batteriemoduls 102 an dem Rahmenelement 104 des Batteriemoduls 102 angeordnet.

Beispielsweise ist es denkbar, dass das Entgasungselement ein Berstelement und/oder ein Druckausgleichselement umfasst oder durch dieses gebildet wird.

Wenn sämtliche Batteriemodule 102 der Batterievorrichtung 100 jeweils ein Entgasungselement umfassen, kann vorzugsweise ein besonders kurzer Entgasungsweg realisiert werden, so dass heiße Gase möglichst direkt in eine Umgebung der Batterievorrichtung 100 geleitet werden können.

Vorzugsweise ist dabei eine Propagation eines thermischen Durchgehens ("thermal runaway") von Batteriezellen 108 eines Batteriemoduls 102 auf weitere Batteriezellen 108 desselben Batteriemoduls 102 und/oder auf Batteriezellen 108 benachbarter Batteriemodule 102 verhinderbar.

Günstig kann es ferner sein, wenn die Batteriemodule 102 der Batterievorrichtung 100 jeweils ein in den Figuren zeichnerisch nicht dargestelltes Propagationsschutzelement umfassen.

Vorzugsweise umfassen die Propagationsschutzelemente eines jeweiligen Batteriemoduls 102 ein hitzebeständiges und/oder thermisch isolierendes Material, beispielsweise Steinwollevlies und/oder Glasfaservlies.

Die Propagationsschutzelemente sind beispielsweise mit den Bodenelementen 106 der Batteriemodule verbunden, beispielsweise verklebt.

Günstig kann es sein, wenn ein Propagationsschutzelement eines Batteriemoduls 102 auf einer dem Aufnahmeraum 112 des Batteriemoduls 102 abgewandten Seite des Bodenelements 106 angeordnet ist.

Vorzugsweise begrenzt das Propagationsschutzelement eines Batteriemoduls 102 dabei den Aufnahmeraum 112 eines benachbarten Batteriemoduls 102.

Durch Vorsehen eines Propagationsschutzelements ist vorzugsweise eine Propagation eines thermischen Durchgehens ("thermal runaway") von Batteriezellen 108 eines Batteriemoduls 102 auf Batteriezellen 108 eines benachbarten Batteriemoduls 102 verhinderbar.

Die in den Fig. 1 bis 16 dargestellte Batterievorrichtung 100 umfasst beispielsweise ferner ein oder mehrere Temperierelemente 200, welche jeweils zwischen zwei benachbarten Batteriemodulen 102 angeordnet sind.

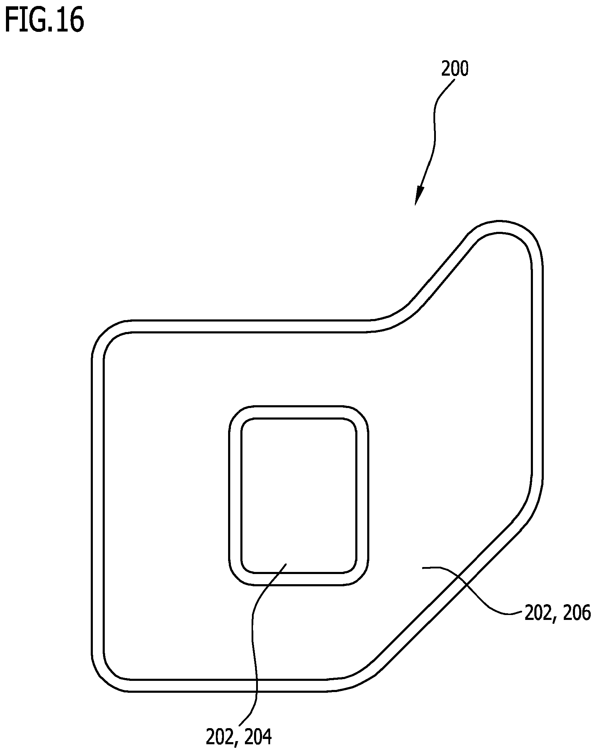

Ein derartiges Temperierelement 200 ist beispielsweise in Fig. 16 dargestellt.

Vorzugsweise weisen die Temperierelemente 200 einen senkrecht zu der Stapelrichtung 110 der Batterievorrichtung 100 genommenen Querschnitt auf, welcher im Wesentlichen einem senkrecht zu der Stapelrichtung 110 der Batterievorrichtung 100 genommenen Querschnitt eines Aufnahmeraums 112 der Batteriemodule 102 der Batterievorrichtung 100 entspricht.

Günstig kann es beispielsweise sein, wenn die Temperierelemente 200 elektrische Widerstandsheizelemente umfassen oder durch diese gebildet sind.

Vorzugsweise bildet ein Temperierelement 200, welches ein elektrisches Widerstandsheizelement umfasst oder durch dieses gebildet wird, ein Propagationsschutzelement.

Ein Temperierelement 200, welches ein elektrisches Widerstandsheizelement umfasst oder durch dieses gebildet wird, umfasst vorzugsweise ein hitzebeständiges Material.

Alternativ oder ergänzend dazu ist es denkbar, dass die Temperierelemente 200, welche jeweils zwischen zwei benachbarten Batteriemodulen 102 angeordnet sind, einen oder mehrere Temperierkanäle umfassen, durch welche ein Temperiermedium, beispielsweise eine Kühl- oder Heizflüssigkeit, leitbar ist.

Günstig kann es dabei sein, wenn die Temperierelemente 200 mittels eines Rollbond-Verfahrens hergestellt sind.

Vorzugsweise umfassen die Temperierelemente 200 jeweils zwei oder mehr als zwei Temperierzonen 202, in welchen voneinander verschiedene Temperaturen einstellbar sind.

Insbesondere weisen die Temperierelemente 200 in den Temperierzonen 202 eine voneinander verschiedene Heizleistung auf.

Beispielsweise ist es denkbar, dass die Temperierelemente 202 eine radial innere Temperierzone 204 und eine die radial äußere Temperierzone 206 umfassen.

Die radial äußere Temperierzone 206 umgibt vorzugsweise die radial innere Temperierzone 204.

Günstig kann es sein, wenn die Temperierelemente 200 in der radial äußeren Temperierzone 206 eine höhere flächenbezogene Heizleistung aufweisen als in der radial inneren Temperierzone 204.

Vorzugsweise kann durch Bereitstellen eines Temperierelements 200 mit mehreren Temperierzonen 204 ein selektives Erwärmen einzelner Gruppen von Batteriezellen 108 ermöglicht werden. Insbesondere sind dabei Temperaturen der Batteriezellen 108 eines Batteriemoduls 102 vergleichmäßigbar.

Vorzugsweise ist durch eine Vergleichmäßigung der Temperaturen der Batteriezellen 108 eines Batteriemoduls 102 ein höherer maximaler Ladestrom und somit insbesondere eine Verkürzung einer Ladezeit realisierbar.

Insbesondere ist ferner eine gleichmäßigere Entladung der Batteriezellen 108 eines Batteriemoduls 102 realisierbar.

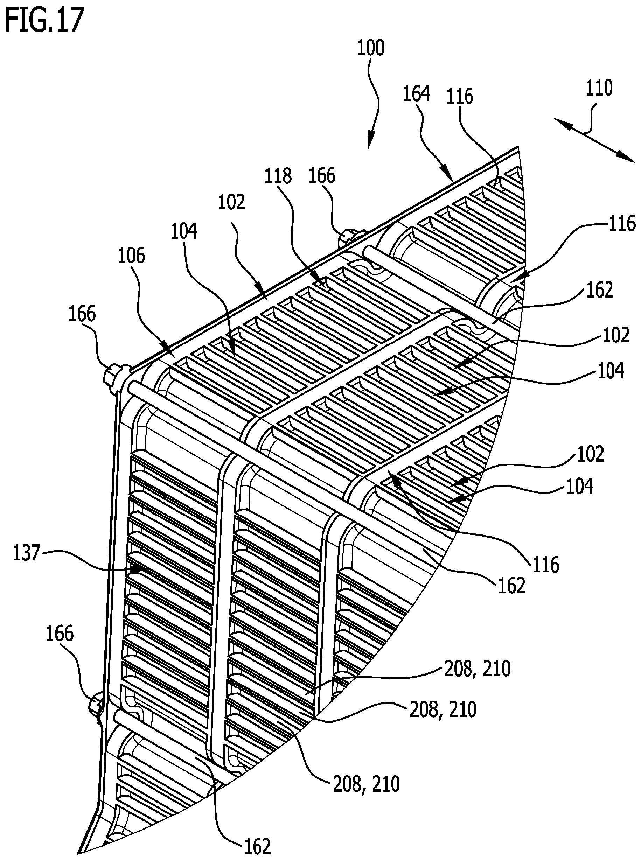

Eine in Fig. 17 dargestellte Ausführungsform einer Batterievorrichtung 100 unterscheidet sich von der in den Fig. 1 bis 16 dargestellten Ausführungsform einer Batterievorrichtung 100 im Wesentlichen dadurch, dass das Rahmenelement 104 und das Bodenelement 106 aus einem metallischen Material hergestellt sind.

Vorzugsweise bildet das Rahmenelement 104 dabei ein Abstandshalterelement 142.

Günstig kann es sein, wenn das Rahmenelement 104 und/oder das Bodenelement 106 einstückig aus einem metallischen Material, beispielsweise aus Aluminium, hergestellt sind.

Beispielsweise ist es denkbar, dass das Rahmenelement 104 und das Bodenelement 106 ein einstückiges Aluminium-Druckgussteil sind.

Alternativ dazu ist es denkbar, dass ein Bodenelement 106 stoffschlüssig mit einem Rahmenelement 104 verbunden, insbesondere verschweißt, ist, beispielsweise mittels Reibrührschweißen.

Durch stoffschlüssiges Verbinden des Bodenelements 106 und des Rahmenelements 104 ist vorzugsweise eine thermische und/oder mechanische Kopplung des Bodenelements 106 und des Rahmenelements 104 realisierbar.

Insbesondere ist eine metallische Wärmeleitung von dem Bodenelement 106 in das Rahmenelement 104 realisierbar.

Vorzugsweise umfasst das Rahmenelement 104 ein oder mehrere Wärmeleitelemente 208, insbesondere eine oder mehrere Kühlrippen 210, welche insbesondere an der Außenoberfläche 184 des Rahmenelements 104 angeordnet sind.

Beispielsweise ist es denkbar, dass die Kühlrippen 210 parallel zu der Stapelrichtung 110 angeordnet sind.

Insbesondere umfasst die Temperiervorrichtung 137 das eine oder die mehreren Wärmeleitelemente 208, insbesondere die Kühlrippen 210.

Vorzugsweise ist die Außenoberfläche 184 des Rahmenelements 104 mittels der Wärmeleitelemente 208, insbesondere mittels der Kühlrippen 210, vergrößerbar.

Ein Verhältnis der Außenoberfläche 184 des Rahmenelements 104 zu einer Innenoberfläche des Rahmenelements 104 ist vorzugsweise mindestens ungefähr 1,3:1, vorzugsweise mindestens ungefähr 1,5:1.

Günstig kann es ferner sein, wenn die Temperiervorrichtung 137 zusätzlich zu den Wärmeleitelementen 208 ein in den Figuren zeichnerisch nicht dargestelltes Gebläse umfasst, mittels welchem die Wärmeleitelemente 208 zum Abführen von Wärme von denselben anblasbar sind.

Alternativ oder ergänzend dazu ist es denkbar, dass die Wärmeleitelemente 208 zum Abführen von Wärme von denselben durch Fahrtwind beim Bewegen eines Fahrzeugs anblasbar sind.

Im Übrigen stimmt die in Fig. 17 dargestellte Ausführungsform einer Batterievorrichtung 100 hinsichtlich Aufbau und Funktion mit der in den Fig. 1 bis 16 dargestellten Ausführungsform einer Batterievorrichtung 100 überein, so dass auf deren vorstehende Beschreibung insoweit Bezug genommen wird.

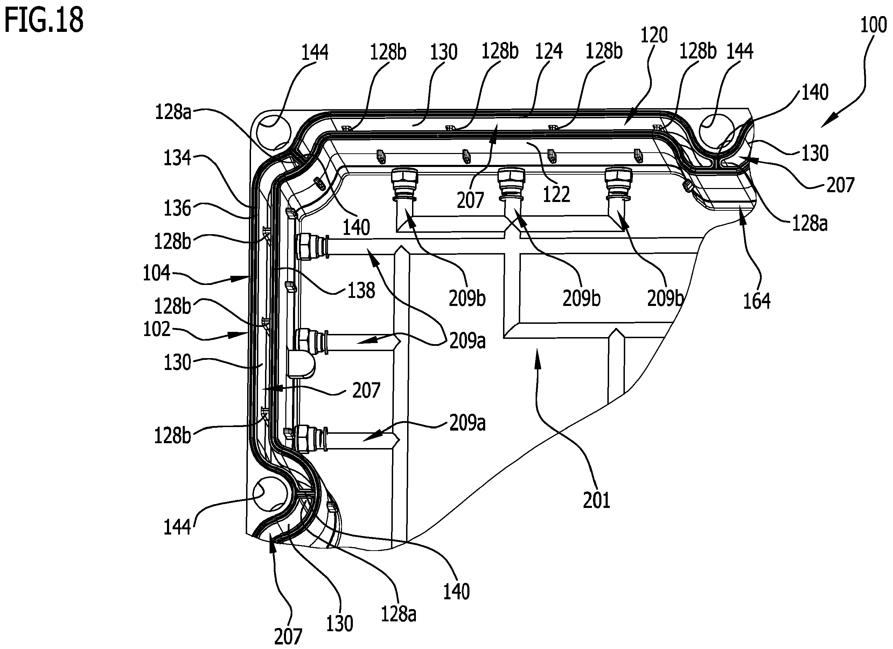

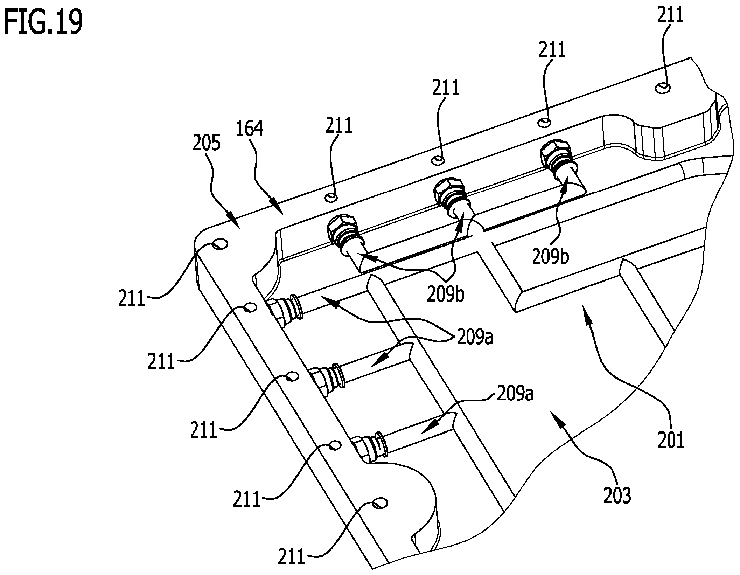

Eine in den Fig. 18 und 19 dargestellte Ausführungsform einer Batterievorrichtung 100 unterscheidet sich von der in den Fig. 1 bis 16 dargestellten Ausführungsform einer Batterievorrichtung 100 im Wesentlichen dadurch, dass einer oder beide Endkörper 164 der Batterievorrichtung 100 eine Verteilerstruktur 201 zum Verteilen von Temperiermedium in die Temperierkanäle 135 der Batteriemodule 102 umfassen.

Günstig kann es sein, wenn Temperiermedium mittels der Verteilerstruktur 201 in die Doppelwandung 120, insbesondere in den Temperierraum 130 eines Batteriemoduls 102, leitbar ist, welches benachbart zu einem Endkörper 164 angeordnet ist.

Die Endkörper 164 umfassen dabei beispielsweise ein Abdeckelement 203 und ein insbesondere ringförmig geschlossenes Randelement 205.

Das Randelement 205 ragt parallel zu der Stapelrichtung 110 vorzugsweise über das Abdeckelement 203 hinaus und wirkt beispielsweise mechanisch stabilisierend.

Bei der in den Fig. 18 und 19 dargestellten Ausführungsform einer Batterievorrichtung 100 weisen einzelne Verbindungsstege 128a parallel zu der Stapelrichtung 110 der Batterievorrichtung 100 eine Höhe auf, welche im Wesentlichen der Höhe des Rahmenelements 106 eines Batteriemoduls 102 entspricht.

Aufgrund der Verbindungsstege 128a sind in der Doppelwandung 120, insbesondere in dem Temperierraum 130 der Batteriemodule 102, Temperierkammern 207 gebildet, welche insbesondere fluidwirksam voneinander getrennt sind.

Günstig kann es dabei sein, wenn die Stegelemente 140 eines Dichtelements 134 an den Verbindungsstegen 128a anliegen.

Vorzugsweise können die Temperierkammern 207 mittels des Dichtelements 134, insbesondere mittels der Stegelemente 140 des Dichtelements 134, abgedichtet werden.

Innerhalb einer jeweiligen Temperierkammer 207 angeordnete Verbindungsstege 128b trennen die jeweilige Temperierkammer 207 vorzugsweise nicht vollständig fluidwirksam.

Beispielsweise ist es dabei möglich, dass die innerhalb einer jeweiligen Temperierkammer 207 angeordneten Verbindungsstege 128b parallel zu der Stapelrichtung 110 der Batterievorrichtung 100 eine Höhe aufweisen, welche kleiner ist als die Höhe des Rahmenelements 106 eines Batteriemoduls 102.

Um Temperiermedium in die Temperierkammern 207 der Doppelwandung 120 des Rahmenelements 106 leiten zu können, umfassen der eine oder die beiden Endkörper 164 insbesondere mehrere Verteilkanäle 209 der Verteilerstruktur 201.

Die Verteilerkanäle 209 umfassen dabei beispielsweise Zulaufkanäle 209a und/oder Rücklaufkanäle 209b.

Günstig kann es sein, wenn ein jeweiliger Verteilerkanal 209 eine in den Figuren zeichnerisch nicht dargestellte Umlenkung umfasst, welche in dem Randelement 205 angeordnet ist.

Mittels der Umlenkung ist Temperiermedium vorzugsweise um ungefähr 90° umlenkbar.

Die Verteilerkanäle 209, insbesondere die Zulaufkanäle 209a und/oder die Rücklaufkanäle 209b, münden vorzugsweise jeweils an einer senkrecht zu der Stapelrichtung 110 angeordneten Stirnseite des Randelements 165 an einer Verteileröffnung 211.

Günstig kann es beispielsweise sein, wenn jeweils drei Verteileröffnungen 211 in jeweils eine Temperierkammer 207 hinein gerichtet sind.

Dabei ist es insbesondere denkbar, dass in eine Temperierkammer 207 nur Verteileröffnungen 211 von Zulaufkanälen 209a und/oder nur Verteileröffnungen 211 von Rücklaufkanälen 209b hinein gerichtet sind.

Günstig kann es insbesondere sein, wenn in benachbarte Temperierkammern 207 alternierend jeweils nur Verteileröffnungen 211 von Zulaufkanälen 209a und/oder nur Verteileröffnungen 211 von Rücklaufkanälen 209b hinein gerichtet sind.

Vorzugsweise ist dabei eine zumindest näherungsweise konstante Temperatur des Rahmenelements 106 einstellbar.

Im Übrigen stimmt die in den Fig. 18 und 19 dargestellte Ausführungsform einer Batterievorrichtung 100 hinsichtlich Aufbau und Funktion mit der in den Fig. 1 bis 16 dargestellten Ausführungsform einer Batterievorrichtung 100 überein, so dass auf deren vorstehende Beschreibung insoweit Bezug genommen wird.

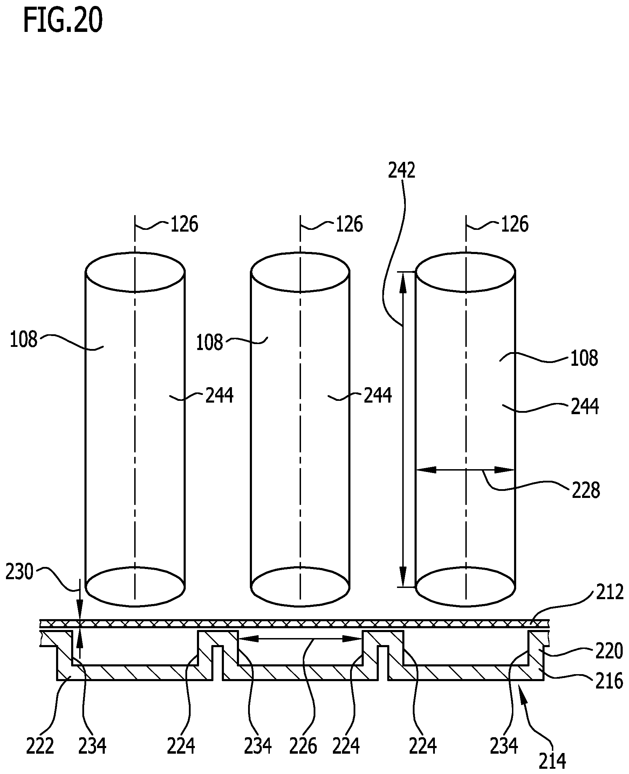

Die Fig. 20 bis 22 zeigen verschiedene Verfahrensschritte einer Ausführungsform eines Verfahrens zum Fixieren von Batteriezellen 108.

Bei dem Verfahren werden die Batteriezellen 108, insbesondere Rundzellen, in einem Lagenelement 212 fixiert, insbesondere durch plastisches Verformen des Lagenelements 212.

Das Lagenelement 212 ist beispielsweise ein warmumformbares Lagenelement 212.

Das Lagenelement 212 umfasst vorzugsweise ein Kunststoffmaterial oder ist aus diesem gebildet.

Das Lagenelement 212 umfasst insbesondere ein elektrisch isolierendes Material oder ist aus diesem gebildet.

Günstig kann es beispielsweise sein, wenn das Lagenelement 212 ein Polyolefin umfasst oder aus diesem gebildet ist, beispielsweise Polyethylen (PE) oder Polypropylen (PP).

Vorzugsweise umfasst das Lagenelement 212 ein Low-Density Polyethylen (LDPE).

Das Lagenelement 212 ist beispielsweise eine Schrumpffolie.

Ferner ist es beispielsweise denkbar, dass das Lagenelement Polymethylmethacrylat (PMMA) oder Polycarbonat (PC) umfasst oder daraus gebildet ist.

Die Batteriezellen 108 werden vor dem Fixieren derselben in dem Lagenelement 212 vorzugsweise relativ zueinander ausgerichtet, insbesondere mittels eines Werkzeugs 214.

Das Werkzeug 214 umfasst insbesondere eine erste Werkzeughälfte 216 mit einer Negativform, in welcher die Batteriezellen 108 zumindest teilweise aufnehmbar sind.

Die erste Werkzeughälfte 216 weist insbesondere eine Negativform des vorgegebenen Musters auf.

Das Werkzeug 214 umfasst vorzugsweise eine zweite Werkzeughälfte 218 mit einer Negativform, in welcher die Batteriezellen 108 zumindest teilweise aufnehmbar sind.

Die erste und die zweite Werkzeughälfte 216, 218 sind vorzugsweise relativ zueinander bewegbar.

Die erste Werkzeughälfte 216 ist insbesondere ein Matrizenelement 220.

Die erste Werkzeughälfte 216 bildet insbesondere ein Formgebungselement 222.

Die erste Werkzeughälfte 216 umfasst vorzugsweise mehrere Positionieröffnungen 224, in welchen jeweils eine Batteriezelle 108 zur Ausrichtung der Batteriezellen 108 aufnehmbar ist.

Insbesondere ist es denkbar, dass die erste Werkzeughälfte 216 mehrere Zeilen und mehrere Reihen von Positionieröffnungen 224 umfasst, wobei eine Zeile und/oder eine Reihe jeweils mehrere Positionieröffnungen 224 umfasst.

Vorzugsweise weist die zweite Werkzeughälfte 218 ebenfalls eine Negativform des vorgegebenen Musters auf.

Die zweite Werkzeughälfte 218 umfasst vorzugsweise ebenfalls mehrere Positionieröffnungen 224, in welchen jeweils eine Batteriezelle 108 zur Ausrichtung der Batteriezellen 108 aufnehmbar ist.

Günstig kann es sein, wenn die Positionieröffnungen 224 der ersten Werkzeughälfte 216 und/oder der zweiten Werkzeughälfte 218 jeweils im Wesentlichen zylindrisch, insbesondere im Wesentlichen kreiszylindrisch, ausgebildet sind.

Vorzugsweise ist ein Innendurchmesser 226 der Positionieröffnungen 224 der ersten Werkzeughälfte 216 größer als ein Außendurchmesser 228 der Batteriezellen 108.

Günstig kann es beispielsweise sein, wenn ein Innendurchmesser 226 der Positionieröffnungen 224 der ersten Werkzeughälfte 216 im Wesentlichen gleich groß oder kleiner ist als die Summe aus dem Außendurchmesser 228 der Batteriezellen 108 und einer doppelten Materialstärke 230 des Lagenelements 212.

Günstig kann es ferner sein, wenn ein Innendurchmesser 232 der Positionieröffnungen der zweiten Werkzeughälfte im Wesentlichen dem Außendurchmesser 228 der Batteriezellen 108 entspricht.

Die Batteriezellen 108 werden vorzugsweise in den Positionieröffnungen 224 der ersten Werkzeughälfte 216 angeordnet.

Günstig kann es sein, wenn dabei eine in den Figuren zeichnerisch nicht dargestellte Positioniervorrichtung verwendet wird, beispielsweise ein Industrieroboter.

Vorzugsweise werden die Batteriezellen 108 in dem vorgegebenen Muster in mehreren Zeilen und mehreren Spalten angeordnet.

Beispielsweise ist es denkbar, dass die Batteriezellen 108 in einer Zeilenrichtung des vorgegebenen Musters jeweils einen identischen ersten Abstand voneinander aufweisen.

Günstig kann es ferner sein, wenn die Batteriezellen 108 in einer Spaltenrichtung des vorgegebenen Musters jeweils einen identischen zweiten Abstand voneinander aufweisen.

Dabei kann vorgesehen sein, dass der erste Abstand in der Zeilenrichtung kleiner oder größer ist als der zweite Abstand in der Spaltenrichtung.

Vorzugsweise wird das Lagenelement 212 verformt, indem das Lagenelement 212 zwischen den Batteriezellen 108 und der ersten Werkzeughälfte 216 positioniert wird und anschließend die Batteriezellen 108 in den Positionieröffnungen 224 der ersten Werkzeughälfte 216 angeordnet werden.

Vorzugsweise werden das Lagenelement 212 und eine jeweilige Batteriezelle 108 dabei innerhalb der Positionieröffnungen 224 der ersten Werkzeughälfte 216 verklemmt und dabei verformt.

Das Lagenelement 212 wird insbesondere jeweils zwischen einer Positionier-öffnungswandung 234 und einer Batteriezelle 108 geklemmt.

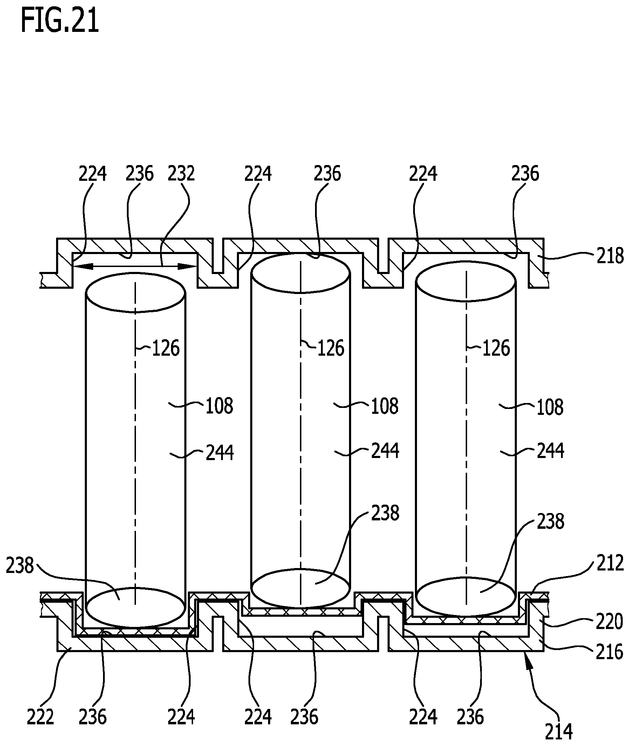

Vor dem Fixieren der Batteriezellen 108 in dem Lagenelement 212 werden diese vorzugsweise zunächst mittels des Werkzeugs 214 parallel zueinander und/oder in dem vorgegebenen Muster ausgerichtet (vergl. Fig. 21).

Die Batteriezellen 108 werden dabei insbesondere derart angeordnet, dass die Längsachsen 126 der Batteriezellen 108 parallel zueinander angeordnet sind.

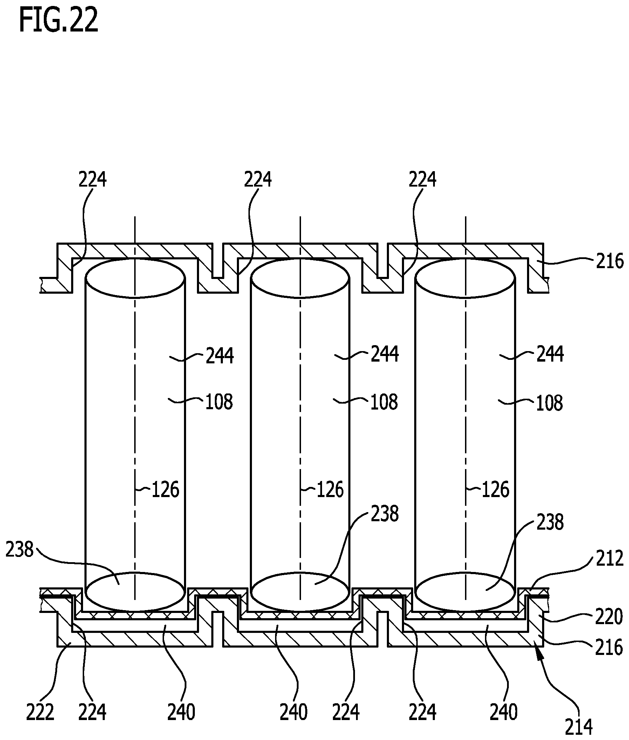

Nach dem parallelen Ausrichten und/oder nach dem Ausrichten in einem vorgegebenen Muster werden vorzugsweise einzelne oder mehrere Batteriezellen 108 parallel zu den Längsachsen 126 der Batteriezellen 108 bewegt (vergl. Fig. 22).

Vorzugsweise werden die Batteriezellen 108 dabei gegen einen Anschlag 236 bewegt, welcher vorzugsweise senkrecht zu den Längsachsen 126 der Batteriezellen 108 angeordnet ist.

Die Batteriezellen 108 werden dabei vorzugsweise derart gegen den Anschlag 236 bewegt, dass die Grundflächen 238 sämtlicher Batteriezellen 108 nach dem Bewegen in einer einzigen Ebene angeordnet sind.

Günstig kann es sein, wenn die erste Werkzeughälfte 216 und die zweite Werkzeughälfte 218 aufeinander zu bewegt werden, um die Grundflächen 238 der Batteriezellen 108 in einer Ebene anzuordnen.

Beispielsweise ist es dabei denkbar, dass die Positionieröffnungen 224 der ersten Werkzeughälfte 216 und/oder die Positionieröffnungen 224 der zweiten Werkzeughälfte 218 einen Anschlag 236 umfassen oder bilden.

Alternativ dazu ist es denkbar, dass die zweite Werkzeughälfte 218 einen Anschlag 236 umfasst und dass die erste Werkzeughälfte 216 eine in den Figuren zeichnerisch nicht dargestellte Bewegungseinrichtung zum Bewegen einzelner oder mehrerer Batteriezellen 108 umfasst, mittels welcher die Batteriezellen gegen den Anschlag 236 der zweiten Werkzeughälfte 218 bewegbar sind.

Beispielsweise ist es denkbar, dass die Bewegungseinrichtung einen oder mehrere Kolben umfasst, welche in Positionieröffnungen 224 der ersten Werkzeughälfte 216 verlagerbar sind.

Alternativ dazu ist es denkbar, dass die Bewegungseinrichtung ein oder mehrere Düsenelemente umfasst, welche in die Positionieröffnungen 224 der ersten Werkzeughälfte 216 münden.

Vorzugsweise werden das Lagenelement 212 und/oder die in einer jeweiligen Positionieröffnung 224 angeordnete Batteriezelle 108 dabei durch Unterdrucksetzen eines von dem Lagenelement 212 und der Positionieröffnung 224 begrenzten Druckraums 240 bewegt.

Insbesondere werden das Lagenelement 212 und die in einer jeweiligen Positionieröffnung 224 der ersten Werkzeughälfte 216 angeordnete Batteriezelle 108 in der Positionieröffnung 224 bewegt.

Vorzugsweise werden die Batteriezellen 108 in dem Lagenelement 212 durch Erwärmen des Lagenelements 212 und/oder durch anschließendes Abkühlen des Lagenelements 212 fixiert.

Das Lagenelement 212 wird vorzugsweise auf die Batteriezellen 108 aufgeschrumpft.

Das Lagenelement 212 wird insbesondere nur auf einen Teilbereich der Batteriezellen 108 aufgeschrumpft.

Vorzugsweise werden die Batteriezellen 108 nicht vollständig von dem Lagenelement 212 umgeben.

Günstig kann es beispielsweise sein, wenn das Lagenelement 212 nur auf einer in Richtung der Längsachsen 126 der Batteriezellen 108 ersten Seite der Batteriezellen 108 auf diese aufgeschrumpft wird.

Beispielsweise kann vorgesehen sein, dass das Lagenelement 212 jeweils auf höchstens ungefähr 50 % einer Länge 242 einer jeweiligen Batteriezelle 108 auf die Batteriezellen 108 aufgeschrumpft wird.

Vorzugsweise wird das Lagenelement 212 jeweils auf mindestens ungefähr 10 %, insbesondere auf mindestens ungefähr 20 %, beispielsweise auf mindestens ungefähr 30 %, der Länge 242 einer jeweiligen Batteriezelle 108 auf die Batteriezellen 108 aufgeschrumpft.

Das Lagenelement 212 liegt nach dem Fixieren der Batteriezellen 108 vorzugsweise topfförmig an den Batteriezellen 108 an.

Insbesondere kann vorgesehen sein, dass das Lagenelement 212 zu höchstens ungefähr 50 % an einer Mantelfläche 244 einer jeweiligen Batteriezelle 108 anliegt.

Vorzugsweise liegt das Lagenelement 212 zu mindestens ungefähr 10 %, beispielsweise zu mindestens ungefähr 20 %, vorzugsweise zu mindestens ungefähr 30 %, an einer Mantelfläche 244 einer jeweiligen Batteriezelle 108 an.

Günstig kann es ferner sein, wenn das Lagenelement nach dem Fixieren der Batteriezellen 108 vollständig an der Grundfläche 238 einer jeweiligen Batteriezelle 108 anliegt.

Das abgekühlte Lagenelement 212 ist vorzugsweise im Wesentlichen starr.

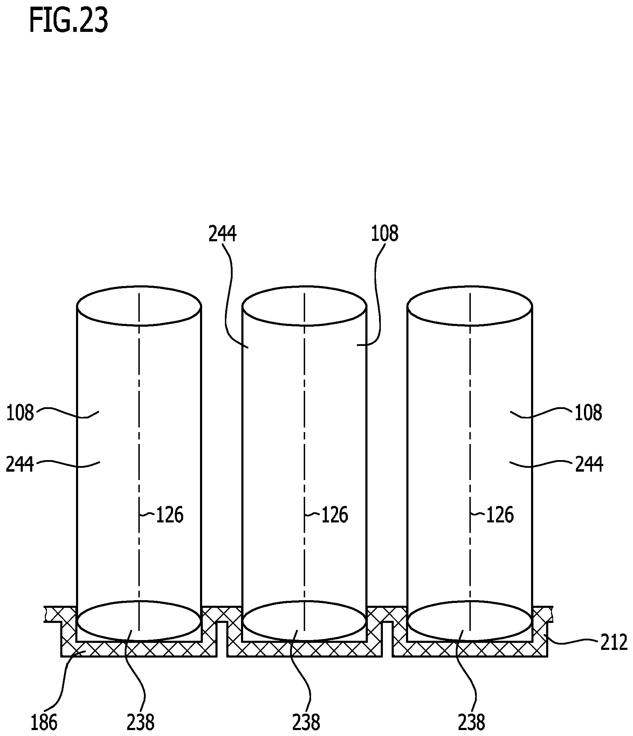

Das plastisch verformte Lagenelement 212 bildet vorzugsweise einen Haltekörper 186 eines Batteriemoduls 102 (vergl. Fig. 23 bis 25).

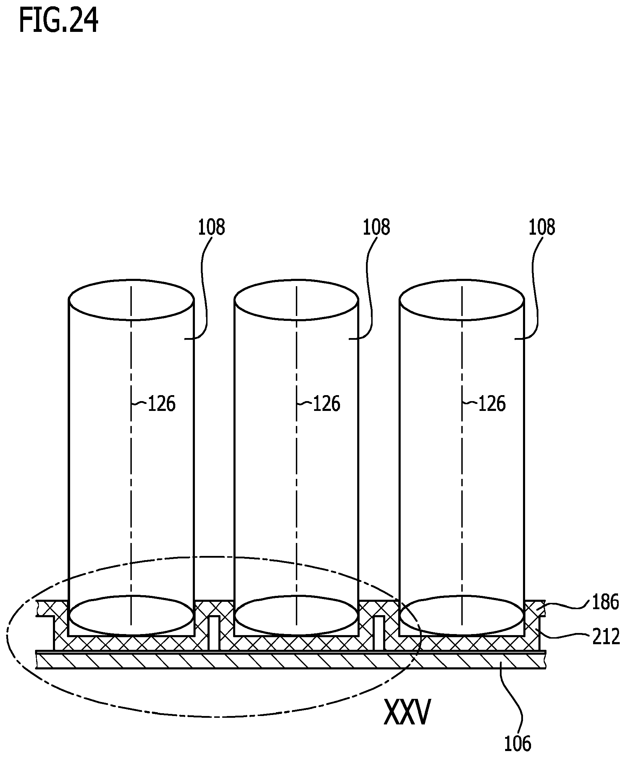

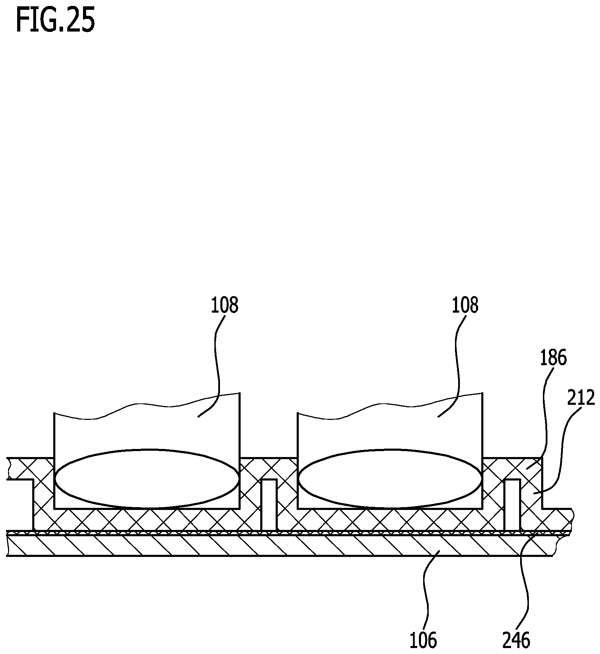

Die Fig. 24 und 25 zeigen ein Bodenelement 106 eines Batteriemoduls 102, wobei das Lagenelement 212 und die in dem Lagenelement 212 fixierten Batteriezellen 108 an dem Bodenelement 106 des Batteriemoduls 102 festgelegt sind.

Vorzugsweise ist das Lagenelement 212 mit dem Bodenelement 106 stoffschlüssig verbunden, insbesondere mittels einer Wärmeleitpaste 246 (vergl. Fig. 25).

## Patentansprüche

1. Batterievorrichtung (100), wobei die Batterievorrichtung (100) ein oder mehrere Batteriemodule (102) umfasst,
wobei ein jeweiliges Batteriemodul (102) Folgendes umfasst:
ein Rahmenelement (104);
ein Bodenelement (106); und
mehrere Batteriezellen (108),
wobei die Batteriemodule (102) entlang einer Stapelrichtung (110) angeordnet oder anordenbar sind, wobei die Rahmenelemente (104) der jeweiligen Batteriemodule (102) Gehäuseabschnitte der Batterievorrichtung (100) bilden.

2. Batterievorrichtung nach Anspruch 1, **dadurch gekennzeichnet, dass** Längsachsen (126) der Batteriezellen (108) eines jeweiligen Batteriemoduls (102) im Wesentlichen parallel zu der Stapelrichtung (110) der Batteriemodule (102) angeordnet sind.

3. Batterievorrichtung nach Anspruch 1 oder 2, **dadurch gekennzeichnet, dass** die Batteriezellen (108) Rundzellen sind.

4. Batterievorrichtung nach einem der Ansprüche 1 bis 3, **dadurch gekennzeichnet, dass** die Batterievorrichtung (100) zwei Endkörper (164) umfasst, wobei die Batteriemodule (102) der Batterievorrichtung (100) vorzugsweise zwischen den zwei Endkörpern (164) angeordnet sind.

5. Batterievorrichtung nach Anspruch 4, **dadurch gekennzeichnet, dass** die zwei Endkörper (164) Befestigungselemente umfassen, mittels welcher die Batterievorrichtung (100) an einer tragenden Struktur, beispielsweise an einer tragenden Struktur eines Fahrzeugs, festlegbar ist.

6. Batterievorrichtung nach einem der Ansprüche 1 bis 5, **dadurch gekennzeichnet, dass** die Batteriemodule (102) der Batterievorrichtung (100) miteinander verspannt oder verspannbar sind.

7. Batterievorrichtung nach einem der Ansprüche 1 bis 6, **dadurch gekennzeichnet, dass** ein jeweiliges Batteriemodul (102) ein Dichtelement (134) und/oder ein Propagationsschutzelement umfasst.

8. Batterievorrichtung nach einem der Ansprüche 1 bis 7, **dadurch gekennzeichnet, dass** die Batteriezellen (108) eines jeweiligen Batteriemoduls (102) an dem Bodenelement (106) des Batteriemoduls (102) festgelegt sind.

9. Batterievorrichtung nach einem der Ansprüche 1 bis 8, **dadurch gekennzeichnet, dass** das Rahmenelement (104) eines jeweiligen Batteriemoduls (102) eine Temperiervorrichtung (137) umfasst oder bildet.

10. Batterievorrichtung nach einem der Ansprüche 1 bis 9, **dadurch gekennzeichnet, dass** einzelne, mehrere oder sämtliche Batteriemodule (102) der Batterievorrichtung (100) jeweils ein Entgasungselement zum Entgasen eines Aufnahmeraums (112) des jeweiligen Batteriemoduls (102) umfassen.

11. Batterievorrichtung nach einem der Ansprüche 1 bis 10, **dadurch gekennzeichnet, dass** sämtliche Batteriemodule (102) der Batterievorrichtung (100) oder mehr als 50% der Batteriemodule (102) der Batterievorrichtung (100) identisch ausgebildet sind.

12. Batterievorrichtung nach einem der Ansprüche 1 bis 11, **dadurch gekennzeichnet, dass** die Batterievorrichtung (100) ein oder mehrere Temperierelemente (200) umfasst, welche jeweils zwischen zwei benachbarten Batteriemodulen (102) angeordnet sind.

13. Batterievorrichtung nach einem der Ansprüche 1 bis 12, **dadurch gekennzeichnet, dass** das Rahmenelement (104) und/oder das Bodenelement (106) insbesondere einstückig aus einem metallischen Material, beispielsweise aus Aluminium, hergestellt sind.

14. Batterievorrichtung nach einem der Ansprüche 1 bis 13, **dadurch gekennzeichnet, dass** das Rahmenelement (104) aus einem Kunststoffmaterial hergestellt ist und/oder dass das Bodenelement (106) aus einem metallischen Material hergestellt ist.

15. Batterievorrichtung nach einem der Ansprüche 1 bis 14, **dadurch gekennzeichnet,**
a) **dass** ein jeweiliges Batteriemodul (102) elektrische Kontaktierelemente umfasst, mittels welcher zwei benachbarte Batteriemodule (102) miteinander durch Stapeln der Batteriemodule (102) entlang der Stapelrichtung (110) in Reihe verschaltbar sind; und/oder
b) **dass** ein jeweiliges Batteriemodul (102) ein oder mehrere Abstandshalterelemente (142) umfasst, mittels welcher die Bodenelemente (106) der Batteriemodule (102) im Wesentlichen parallel zueinander angeordnet oder anordenbar sind; und/oder
c) **dass** ein jeweiliges Batteriemodul (102) eine Detektionseinrichtung zur Detektion der Zellspannungen der Batteriezellen (108) des Batteriemoduls (102) und/oder zur Detektion der Temperaturen der Batteriezellen (108) des Batteriemoduls (102) umfasst und/oder dass ein jeweiliges Batteriemodul (102) einen Balancer zum Balancing der Batteriezellen (108) des Batteriemoduls (102) umfasst.

## Claims

1. Battery device (100), wherein the battery device (100) comprises one or more battery modules (102),
wherein a respective battery module (102) comprises the following:
a frame element (104);
a base element (106); and
a plurality of battery cells (108),
wherein the battery modules (102) are arranged or can be arranged along a stacking direction (110), wherein the frame elements (104) of the respective battery modules (102) form housing portions of the battery device (100).

2. Battery device according to Claim 1, **characterized in that** longitudinal axes (126) of the battery cells (108) of a respective battery module (102) are arranged substantially parallel to the stacking direction (110) of the battery modules (102).

3. Battery device according to Claim 1 or 2, **characterized in that** the battery cells (108) are round cells.

4. Battery device according to any of Claims 1 to 3, **characterized in that** the battery device (100) comprises two end bodies (164), wherein the battery modules (102) of the battery device (100) are preferably arranged between the two end bodies (164).

5. Battery device according to Claim 4, **characterized in that** the two end bodies (164) comprise fastening elements, by means of which the battery device (100) can be fixed to a supporting structure, for example to a supporting structure of a vehicle.

6. Battery device according to any of Claims 1 to 5, **characterized in that** the battery modules (102) of the battery device (100) are braced or can be braced to each other.

7. Battery device according to any of Claims 1 to 6, **characterized in that** a respective battery module (102) comprises a sealing element (134) and/or a propagation protection element.

8. Battery device according to any of Claims 1 to 7, **characterized in that** the battery cells (108) of a respective battery module (102) are fixed to the base element (106) of the battery module (102).

9. Battery device according to any of Claims 1 to 8, **characterized in that** the frame element (104) of a respective battery module (102) comprises or forms a temperature-control device (137).

10. Battery device according to any of Claims 1 to 9, **characterized in that** individual, a plurality of or all of the battery modules (102) of the battery device (100) each comprise a degassing element for degassing a receiving chamber (112) of the respective battery module (102).

11. Battery device according to any of Claims 1 to 10, **characterized in that** all of the battery modules (102) of the battery device (100) or more than 50% of the battery modules (102) of the battery device (100) are identical.

12. Battery device according to any of Claims 1 to 11, **characterized in that** the battery device (100) comprises one or more temperature-control elements (200), which are arranged between two adjacent battery modules (102) in each case.

13. Battery device according to any of Claims 1 to 12, **characterized in that** the frame element (104) and/or the base element (106) are/is produced in particular in one piece from a metal material, for example from aluminium.

14. Battery device according to any of Claims 1 to 13, **characterized in that** the frame element (104) is produced from a plastic material and/or **in that** the base element (106) is produced from a metal material.

15. Battery device according to any of Claims 1 to 14, **characterized**
a) **in that** a respective battery module (102) comprises electrical contact-making elements, by means of which two adjacent battery modules (102) can be interconnected in series with each other by stacking the battery modules (102) along the stacking direction (110); and/or
b) **in that** a respective battery module (102) comprises one or more spacer elements (142), by means of which the base elements (106) of the battery modules (102) are arranged or can be arranged substantially parallel to each other; and/or
c) **in that** a respective battery module (102) comprises a detection device for detecting the cell voltages of the battery cells (108) of the battery module (102) and/or for detecting the temperatures of the battery cells (108) of the battery module (102) and/or in that a respective battery module (102) comprises a balancer for balancing the battery cells (108) of the battery module (102).

## Revendications

1. Dispositif de batterie (100), le dispositif de batterie (100) comprenant un ou plusieurs modules de batterie (102),
un module de batterie (102) respectif comprenant :
un élément d'encadrement (104) ;
un élément (106) formant fond ; et
une pluralité de cellules de batterie (108),
les modules de batterie (102) étant agencés ou aptes à être agencés le long d'une direction d'empilement (110), les éléments d'encadrement (104) des modules de batterie (102) respectifs formant des parties de boîtier du dispositif de batterie (100).

2. Dispositif de batterie selon la revendication 1, **caractérisé en ce que** les axes longitudinaux (126) des cellules de batterie (108) d'un module de batterie respectif (102) sont agencés sensiblement parallèlement à la direction d'empilement (110) des modules de batterie (102).

3. Dispositif de batterie selon la revendication 1 ou la revendication 2, **caractérisé en ce que** les cellules de batterie (108) sont des cellules rondes.

4. Dispositif de batterie selon l'une des revendications 1 à 3, **caractérisé en ce que** le dispositif de batterie (100) comprend deux corps d'extrémité (164), les modules de batterie (102) du dispositif de batterie (100) étant de préférence agencés entre les deux corps d'extrémité (164).

5. Dispositif de batterie selon la revendication 4, **caractérisé en ce que** les deux corps d'extrémité (164) comprennent des éléments de fixation au moyen desquels le dispositif de batterie (100) est apte à être fixé à une structure porteuse, par exemple à une structure porteuse d'un véhicule.

6. Dispositif de batterie selon l'une des revendications 1 à 5, **caractérisé en ce que** les modules de batterie (102) du dispositif de batterie (100) sont reliés entre eux ou sont aptes à être reliés entre eux.

7. Dispositif de batterie selon l'une des revendications 1 à 6, **caractérisé en ce qu'**un module de batterie (102) comprend un élément d'étanchéité (134) et/ou un élément de protection contre la propagation.

8. Dispositif de batterie selon l'une des revendications 1 à 7, **caractérisé en ce que** les cellules de batterie (108) d'un module de batterie (102) respectif sont fixées à l'élément formant fond (106) du module de batterie (102).

9. Dispositif de batterie selon l'une des revendications 1 à 8, **caractérisé en ce que** l'élément d'encadrement (104) d'un module de batterie (102) respectif comprend ou forme un dispositif de régulation de température (137).

10. Dispositif de batterie selon l'une des revendications 1 à 9, **caractérisé en ce que** certains, plusieurs ou tous les modules de batterie (102) du dispositif de batterie (100) comprennent chacun un élément de dégazage pour dégazer un espace de réception (112) du module de batterie (102) respectif.

11. Dispositif de batterie selon l'une des revendications 1 à 10, **caractérisé en ce que** tous les modules de batterie (102) du dispositif de batterie (100), ou plus de 50% des modules de batterie (102) du dispositif de batterie (100), sont de conception identique.

12. Dispositif de batterie selon l'une des revendications 1 à 11, **caractérisé en ce que** le dispositif de batterie (100) comprend un ou plusieurs éléments de régulation de température (200) qui sont chacun agencés entre deux modules de batterie (102) adjacents.

13. Dispositif de batterie selon l'une des revendications 1 à 12, **caractérisé en ce que** l'élément d'encadrement (104) et/ou l'élément (106) formant fond sont notamment fabriqués d'une seule pièce à partir d'un matériau métallique, par exemple en aluminium.

14. Dispositif de batterie selon l'une des revendications 1 à 13, **caractérisé en ce que** l'élément d'encadrement (104) est fabriqué à partir d'une matière plastique et/ou **en ce que** l'élément (106) formant fond est fabriqué à partir d'un matériau métallique.

15. Dispositif de batterie selon l'une des revendications 1 à 14, **caractérisé**
a) **en ce qu'**un module de batterie (102) respectif comprend des éléments de contact électrique au moyen desquels deux modules de batterie (102) adjacents sont aptes à être interconnectés en série par empilement des modules de batterie (102) dans le sens d'empilement (110) ; et/ou
b) **en ce qu'**un module de batterie respectif (102) comprend un ou plusieurs éléments d'espacement (142) au moyen desquels les éléments formant fond (106) des modules de batterie (102) sont agencés ou sont aptes à être agencés de manière sensiblement parallèle les uns aux autres ; et/ou
c) **en ce qu'**un module de batterie (102) respectif comprend un dispositif de détection pour détecter les tensions des cellules de batterie (108) du module de batterie (102) et/ou pour détecter les températures des cellules de batterie (108) du module de batterie (102) et/ou en ce qu'un module de batterie (102) comprend un équilibreur pour équilibrer des cellules de batterie (108) du module de batterie (102).
